# EUROPÄISCHE PATENTSCHRIFT

(11) **EP 4 469 250 B1**
(45) Veröffentlichungstag und Bekanntmachung des Hinweises auf die Patenterteilung: **27.05.2026**
(21) Anmeldenummer: 22773125.4
(22) Anmeldetag: 31.08.2022
(51) Int. Cl.: B26D 7/06, B26D 7/18, B26D 3/28

(54) **SCHNEID- UND FORM-ANLAGE**
SYSTEM TO CUT AND FORM
SYSTÈME POUR DÉCOUPER ET FORMER

(30) Priorität: 28.01.2022 CH 2282202022
(43) Veröffentlichungstag der Anmeldung: 04.12.2024
(73) Patentinhaber: Emmi Schweiz AG, 6005 Luzern (CH)
(72) Erfinder: LOOSLI, Kurt, 2542 Pieterlen (CH); PURTSCHERT, Stefan, 3324 Hindelbank (CH); WINKELMANN, Marc, 9500 Wil SG (CH); BOHL, Thomas, 8590 Romanshorn (CH)
(74) Vertreter: Troesch Scheidegger Werner AG
(86) Internationale Anmeldenummer: PCT/EP2022/074164
(87) Internationale Veröffentlichungsnummer: WO 2023/143757

(56) Entgegenhaltungen:
- EP-A1- 0 348 615
- EP-A1- 3 858 205
- CH-A2- 710 285
- CH-A2- 716 851
- FR-A1- 2 228 583
- FR-A1- 3 108 098

## Beschreibung

### TECHNISCHES GEBIET DER ERFINDUNG

Die vorliegende Erfindung betrifft eine Schneide- und Formanlage zum Herstellen von geformtem Schnittgut.

### BESCHREIBUNG DES TECHNISCHEN GEBIETS

Auf dem Gebiet der Lebensmittel-Verarbeitung ist es eine Spezialität, Lebensmittelprodukte in speziellen Formen für den Verkauf herzustellen. So ist es beispielsweise für Käse bekannt, diesen nicht nur stück- oder scheibenweise anzubieten, sondern alternativ auch als Bruchkäse, Hobelrollen oder Rosetten. Solche Formstücke erfordern in der Regel die Bearbeitung des Käses in Handarbeit, was die Herstellung aufwändig werden lässt. So muss beispielsweise das Personal in einer gekühlten Umgebung arbeiten, und eine höhere Stückzahl geformter Käseprodukte erfordert eine entsprechend hohe Personalbesetzung. Auch muss für das Erzielen einer gleichmässigen Formung des Lebensmittels das Personal entsprechend geschult sein. Insbesondere bei der Herstellung von komplizierteren Formprodukten wie Tête de Moine Rosetten ist bislang die Bearbeitung der Rosetten zum Beispiel für das Formen und das Abfüllen durch den Menschen notwendig, um beispielsweise eine optisch ansprechende und doch standardisierte Rosettenformen und deren Anordnung in der Verkaufsschachtel zu erzielen. Die Patentanmeldung CH 710285 A2 betrifft einen Käsehalter in Form eines Laibs mit einer im Wesentlichen zylindrischen Form und zwei ebenen, im Wesentlichen parallelen Seiten, der dazu bestimmt ist, mit Hilfe einer Vorrichtung mit einem Sockel, einer Spindel und einem Messer, das sich auf der Spindel dreht, abgeschabt zu werden.

Die Patentanmeldung CH 716851 A2 betrifft eine Vorrichtung zum Schaben von Lebensmitteln, die eine Platte zur Aufnahme des Lebensmittels und ein vorzugsweise abnehmbares Schabemesser umfasst, das um eine durch die Mitte des Lebensmittels verlaufende Drehachse drehbar angebracht ist, um mit einer Oberseite des auf der Platte platzierten Lebensmittels zusammenzuwirken, wobei das Schabemesser mit einem Griff versehen ist, der drehbar auf einer versetzten Achse des Schabemessers angebracht ist, wobei die versetzte Achse im Wesentlichen parallel zur Drehachse des Schabemessers verläuft.

Die Patentanmeldung EP 3858205 A1 betrifft eine Vorrichtung zum Erhalten von Käsespänen umfassend eine Haltevorrichtung, die zum Halten eines Rades geeignet ist und um eine Drehachse drehbar ist; ein Werkzeug mit einer Schneidkante zum Abschaben des Rades, wodurch Käsespäne erzeugt werden; ein Sammelelement zum Sammeln der Späne, das in der Nähe der Haltevorrichtung angeordnet ist; eine Bewegungsvorrichtung zum Annähern/Entfernen des Werkzeugs an/von der Haltevorrichtung.

### ZUSAMMENFASSUNG DER ERFINDUNG

Es ist die Aufgabe der vorliegenden Erfindung, eine Vorrichtung zum automatisierten Schneiden und Formen von Schnittgut von einem Lebensmittelblock bereitzustellen.

Die Aufgabe wird durch das Bereitstellen einer Schneide- und Form-Anlage mit den Merkmalen des Anspruchs 1 gelöst. Weitere Ausführungsformen werden in weiteren Ansprüchen definiert.

Die Schneide- und Form-Anlage umfasst:
Eine Aufnahme mit einer Auflagefläche. Die Aufnahme ist derart ausgebildet, dass ein Lebensmittel-Block auf die Auflagefläche aufgelegt werden und gegebenenfalls gegenüber anderen Elementen der Schneide- und Formanlage positioniert werden kann.

Die Aufnahme und/oder die Auflagefläche kann an eine Form des zu behandelnden Lebensmittelblocks angepasst sein. Alternativ ist es denkbar, dass, wenn zum Beispiel die Ausbildung der Aufnahme und/oder der Auflagefläche durch andere Parameter vorgegeben ist, den Lebensmittelblock an die Ausbildung der Aufnahme und/oder Auflagefläche anzupassen.

Beispielsweise kann die Auflagefläche tellerförmig ausgebildet sein. Andere, abgewandelte oder alternative Formen der Auflagefläche sind ebenfalls möglich, beispielsweise Formen, die nicht eine ebene Fläche sondern eine dreidimensionale Fläche darstellen, zum Beispiel eine Keilform.

Die Seite des Lebensmittelblocks, die auf der Auflagefläche der Aufnahme aufliegt, wird im Zusammenhang mit der vorliegenden Erfindung auch als Unterseite des Lebensmittelblocks definiert.

Die Schneide- und Form-Anlage umfasst weiterhin ein Messer mit einer Schneidekante. Mit der Schneidekante kann Schnittgut eines auf der Auflagefläche der Aufnahme positionierten Lebensmittelblocks von diesem abgeschnitten werden. Dazu ist das Messer gegenüber der Auflagefläche positioniert und möglichst auch positionierbar.

Es ist vorgesehen, dass das Messer oder die Aufnahme um eine erste Rotationsachse drehbar ausgebildet ist oder dass das Messer und die Aufnahme um eine erste Rotationsachse drehbar ausgebildet sind. Wichtig ist, dass mittels der Drehung das Messer und die Auflagefläche relativ zueinander und dabei gegeneinander bewegt werden. Durch diese relative Bewegung von Messer und Auflagefläche zueinander sowie ihre Position zueinander kann von einem aufgesetztem Lebensmittelblock ein oder mehrere Stücke abgeschnitten werden.

Im Zusammenhang mit der vorliegenden Erfindung werden die Begriffe Rotation, Drehung, Rotationsbewegung und Drehbewegung austauschbar verwendet, es sei denn, sie werden explizit für verschiedene Zusammenhänge benutzt. Sie beschreiben eine Bewegung um eine Achse. Diese Achse wird auch als Rotationsachse bezeichnet.

Es ist zudem vorgesehen, dass das Messer und die Aufnahme entlang der ersten Rotationsachse zueinander bewegbar ausgebildet sind. Dazu kann das Messer bewegbar sein, oder es ist die Aufnahme entsprechend bewegbar ausgebildet. Alternativ können sowohl Messer als auch Aufnahme entsprechend bewegbar sein.

Es ist vorgesehen, dass bei dieser Bewegung sowohl eine Hinbewegung zueinander als auch eine Rückwärtsbewegung, also eine Bewegung weg voneinander möglich ist.

Die Schneide- und Form-Anlage umfasst zudem einen Formgreifer. Der Formgreifer ist mit einem distalen Ende auf die Schneidekante des Messers hin ausrichtbar. Er ist zudem ausgebildet, um abgeschnittenes Schnittgut automatisiert zu greifen und zu formen. Dazu ist vorzugsweise der Formgreifer relativ zu der Schneidekante des Messers positionierbar. Das Positionieren des Formgreifers gegenüber der Schneidekante des Messers kann vorzugsweise durch eine Bewegung des Formgreifers erfolgen. Alternativ kann die Aufnahme und das Messer in Bezug auf den Formgreifer bewegt werden, oder sowohl Formgreifer und Aufnahme und Messer sind gegeneinander bewegbar ausgebildet.

Als distales Ende des Formgreifers ist dabei das Ende gemeint, mit welchem der Formgreifer am nächsten gegenüber dem Messer positioniert ist, wenn sich das Messer in einer Abschneide-Position und der Formgreifer in der entsprechend ausgerichteten Greif-Position befindet. Vorzugsweise erstreckt sich das gegenüber dem Formgreifer positionierte distale Ende entlang einer Gerade, welche gegenüber der Schneidekante des Messers ausgerichtet ist. Besonders bevorzugt ist dabei das distale Ende des Formgreifers parallel zu der Schneidekante des Messers ausgerichtet.

Es kann vorgesehen sein, dass an einem proximalen Ende des Formgreifers dieser Halteelemente umfasst, mit welchen der Formgreifer innerhalb der Schneide- und Formanlage gehalten wird. Als proximales Ende wird hier das dem distalen Ende gegenüberliegende Ende bezeichnet. Es kann vorgesehen sein, dass der Formgreifer austauschbar an einer Greiferhalterung befestigt ist, beispielsweise mit einem oder mehreren Halteelementen an seinem proximalen Ende.

Schliesslich umfasst die Schneide- und Form-Anlage eine Steuerung, welche zum Steuern des Formgreifers ausgebildet ist. Zudem ist die Steuerung zum Steuern der Positionen des Formgreifers, der Aufnahme und der Schneidekante des Messers zueinander ausgebildet.

Im Zusammenhang mit der vorliegenden Erfindung wird unter Abschneiden sowohl Schneiden, Hobeln und Schaben verstanden. Beim Schneiden erstreckt sich das Messer in der Regel parallel zu der Schnittfläche am Lebensmittelblock. Beim Hobeln ist das Messer in einem kurzen Winkel gegenüber der Schnittfläche am Lebensmittelblock angeordnet. Beim Schaben ist das Messer senkrecht zur Schnittfläche am Lebensmittelblock angeordnet ist. Es ist im Fall der vorliegenden Erfindung unerheblich, ob das Messer gegenüber einem feststehenden Lebensmittelblock, ob der Lebensmittelblock gegenüber einem feststehenden Messer, oder ob beide, Messer und Lebensmittelblock gegeneinander bewegt werden. Der Einfachheit halber wird unter dem Begriff Abschneiden jedes Abtrennen von Teilen des Lebensmittelblocks mittels des Messers verstanden, es sei denn, es wird explizit auf einen bestimmten Vorgang Bezug genommen. Die erfindungsbemässe Schneide- und Formanlage kann entsprechend der Anordnung des Messers zum Schneiden, Hobeln oder Schaben ausgebildet sein, wobei Abschneiden eher als Überbegriff verwendet wird.

Wie später genauer beschrieben ist in einer bevorzugten Ausführungsform die Schneide- und Form-Anlage zum Schaben von Schabgut ausgebildet, wobei das Messer senkrecht gegenüber einer Schnittfläche angeordnet ist und der Lebensmittelblock mittels der Aufnahme gegenüber dem Messer gedreht wird.

Im Zusammenhang mit der vorliegenden Erfindung wird unter einem Lebensmittelblock ein fester oder halbfester Lebensmittel-Körper verstanden, der im Wesentlichen formstabil auf einer Aufnahme positioniert und rotiert werden kann. Die Festigkeit des Lebensmittelblocks wird im Folgenden am Beispiel eines Käseblocks beschrieben. So werden beispielsweise Schweizer Käsetypen gemäss Artikel 52 Absatz 2 VLtH (Verordnung des EDI vom 16. Dezember 2016 über Lebensmittel tierischer Herkunft; SR 817.022.108) nach dem Wassergehalt im fettfreien Käse (wff) in folgende Festigkeitsstufen eingeteilt:
a. extra-hart bis 500 g/kg;
b. hart mehr als 500 bis 540 g/kg;
c. halbhart mehr als 540 bis 650 g/kg;
d. weich mehr als 650 g/kg.

Eine Schneide- und Form-Anlage gemäss der vorliegenden Erfindung kann insbesondere dazu ausgelegt sein, einen harten und halbharten Käseblock gemäss obiger Definition zu bearbeiten. Ebenfalls geeignet für die Verwendung in einer erfindungsgemässen Schneide- und Formanlage sind Lebensmittelblöcke, die eine vergleichbare Härte aufweisen. Die Eignung kann dadurch erzielt bzw. verbessert werden, indem beispielsweise die Härte und Dicke des Messers, die Rotationsgeschwindigkeit von Lebensmittelblock gegenüber Messer und die Einstechtiefe des Messers in den Lebensmittelblock aufeinander abgestimmt. Auch kann beispielsweise mittels der Verarbeitungstemperatur die Festigkeit eines Lebensmittels und damit deren Eignung beeinflusst werden. Ebenso kann eine Verarbeitbarkeit mittels der Messertemperatur oder anderen Hilfsmittels wie Ultraschall (gegen ein Verkleben von abgeschnittenem Lebensmittelgut am Messer) oder Beschichtungen des Lebensmittelblocks (z.B. Wachs) erzielt werden. Neben verschiedenen Käseblöcke sind ebenfalls geeignete Lebensmittel in Blockform zum Beispiel Wurst- oder Fleischwaren, Fette wie z.B. Butter, oder auch Schokolade oder Eis.

Die Auflagefläche weist eine Form und eine Grösse auf, die geeignet ist, den gewünschten Lebensmittelblock stabil zu tragen. Sie kann in ihrer Form der Form des Lebensmittelblocks angepasst sein. Eine bevorzugte Form ist beispielsweise eine Kreisform (also tellerförmig) oder ein Kreisring. Ebenfalls geeignet ist ein Viereck, im speziellen ein Quadrat oder ein reguläres Polygon. Ist die Aufnahme um die erste Rotationsachse rotierbar ausgebildet, ist vorzugsweise die Form der Auflagefläche und vorzugsweise auch die Form der Aufnahme selbst so gewählt, dass eine ruhige Rotationsbewegung möglich ist.

Die Auflagefläche kann zusätzlich zu ihrer Grundfläche eine Höhenausdehnung aufweisen. Beispielsweise kann die Auflagefläche konusförmig oder kegelstumpfförmig sein. In diesem Fall weist sie eine kreisförmige Grundfläche und zudem eine Mantelfläche, die sich in die Höhe erstreckt. Ein Lebensmittelblock kann in diesem Fall insbesondere die Mantelfläche beaufschlagen. Die Auflagefläche kann hier zusätzlichen Halt für den Lebensmittelblock bereitstellen. Andere Flächen sind ebenfalls denkbar, solange ein Lebensmittelblock auf der Aufnahme auflegbar und auch positionierbar ist.

Die erste Rotationsachse erstreckt sich vorzugsweise senkrecht zu der Auflagefläche oder, wenn die Auflagefläche eine Ausdehnung in die Höhe aufweist, senkrecht zu deren Grundfläche.

Die Steuerung der Schneide- und Form-Anlage ist eine Verarbeitungseinheit, welche einen oder mehrere Vorgänge gemäss vorab hinterlegten Befehlen kontrolliert. Solche Befehle können zum Beispiel in Form eines Software-Programms hinterlegt sein. Die Steuerung kontrolliert die verschiedenen Funktionen oder Aktionen der Schneide- und Formanlage, indem sie die jeweiligen einzelnen Komponenten funktionell und steuerungstechnisch miteinander verbindet und sie aufeinander abstimmt.

Insbesondere ist die Steuerung ausgebildet, den Formgreifer zum Formen des Schnittguts zu kontrollieren. Ebenfalls ist die Steuerung ausgebildet:
- die Rotation der Aufnahme um die erste Rotationsachse zu kontrollieren, wenn die Aufnahme drehbar ausgebildet ist. Vorzugsweise ist die Steuerung in diesem Fall ausgebildet, einen Antrieb der Aufnahme zu kontrollieren, mit welchem die Aufnahme automatisiert um die Rotationsachse gedreht wird; und/oder
- eine Bewegung der Aufnahme entlang der ersten Rotationsachse zu kontrollieren, wenn die Aufnahme entlang der Rotationsachse bewegbar ausgebildet ist. Vorzugsweise ist Steuerung in diesem Fall ausgebildet, einen Antrieb der Aufnahme zu kontrollieren, mit welchem die Aufnahme entlang der ersten Rotationsachse bewegt wird. Vorzugsweise ist diese Bewegung linear; und/oder
- eine Rotation des Messers um die erste Rotationsachse zu kontrollieren, wenn das Messer um die Rotationsachse drehbar ausgebildet ist. Vorzugsweise ist die Steuerung in diesem Fall ausgebildet, einen Antrieb des Messers zu kontrollieren, mit welchem das Messer um die erste Rotationsachse bewegt wird; und/oder
- eine Bewegung des Messers entlang der ersten Rotationsachse, wenn das Messer entlang der ersten Rotationsachse bewegbar ist. Vorzugsweise ist die Steuerung in diesem Fall ausgebildet, einen Antrieb des Messers zu kontrollieren, mit welchem das Messer entlang der ersten Rotationsachse bewegt wird. Vorzugsweise ist diese Bewegung linear.

Es kann vorgesehen sein, dass die Schneide- und Form-Anlage eine zentrale Steuerung umfasst, welche funktional mit den verschiedenen Elementen der Schneide- und Form-Anlage verbunden. Alternativ kann es vorgesehen sein, dass einzelne oder jedes Element der Schneide- und Form-Anlage eine eigene Steuerung umfasst. In diesem Fall sind vorzugsweise die individuellen Steuerungen funktionell miteinander verbunden.

Eine Steuerung kann ein interner oder externer Prozessor sein. Ein interner Prozessor kann beispielsweise ein in das jeweilige Element der Schneide- und Form-Anlage integrierter Prozessor sein. Ein externer Prozessor kann beispielsweise ein Prozessor eines Personal Computers (PC) oder generell einer Rechenanlage sein, die funktionell mit dem entsprechenden Element der Schneide- und Formanlage verbunden ist.

Die Steuerung kann die verschiedenen Elemente der Schneide- und Form-Anlage mithilfe eines oder mehrerer Sensoren steuern, wie später ausgeführt wird.

In einer Ausführungsform der Erfindung, die mit jeder anderen zuvor genannten oder noch zu nennenden Ausführungsform kombiniert werden kann, sofern es nicht im Widerspruch zueinandersteht, umfasst der Formgreifer zumindest zwei gegeneinander bewegbare Greiferbacken. Jede Greiferbacke weist eine Innenseite auf. Die Greiferbacken bilden mit ihren Innenseiten gemeinsam eine formgebende Aufnahme für von einem Lebensmittel-Block abgeschnittenes Schnittgut.

Gegeneinander bewegen bedeutet in diesem Fall eine Bewegung aufeinander zu und eine Bewegung voneinander weg. Es kann vorgesehen sein, dass beide Greiferbacken sich aufeinander zu oder wegbewegen. Alternativ kann vorgesehen sein, dass nur eine Greiferbacke gegenüber der anderen Greiferbacke bewegbar ist, während die andere Greiferbacke unbewegt ist.

Durch das gegeneinander Bewegen der Greiferbacken wird der Formgreifer in einen geschlossenen Zustand gebracht, in welchem die Greiferbacken in einer zueinander nahestmöglichen Position positioniert sind, und in einen geöffneten Zustand, in welchem die Greiferbacken weiter voneinander beabstandet sind. In dem geschlossenen Zustand ist die formgebende Aufnahme verkleinert, während sie in dem geöffneten Zustand vergrössert ist.

Vorzugsweise kann der Formgreifer in dem geschlossenen Zustand Schnittgut in seiner Aufnahme halten, auch wenn er zum Beispiel von dem Messer wegbewegt wird, um das Schnittgut zu einer Abfüllstation zu befördern. In dem geöffneten Zustand hingegen kann der Formgreifer abgeschnittene Lebensmittelscheiben aufnehmen und auch wieder abgeben. Zudem sind die Greiferbacken derart dimensioniert und geformt, dass sie in dem geschlossenen Zustand Schnittgut in der Aufnahme in eine gewünschte Form bringt.

Vorzugsweise bilden diejenigen Seiten der Greiferbacken, welche gegenüber der Schneidekante des Messers angenähert sind, das distale Ende des Formgreifers.

Es kann vorgesehen sein, dass die Greiferbacken an einer Greiferhalterung befestigt sind. Besonders geeignet ist eine austauschbare Befestigung. So kann beispielsweise mit der gleichen Schneide- und Formanlage Schnittgut automatisiert in verschiedene Formen gebracht werden, indem jeweils verschieden geformten Formgreifer respektive Greiferbacken in der Schneide- und Formanlage eingesetzt werden. Es kann zudem vorgesehen sein, dass der gesamte Formgreifer oder nur einzelne oder jede Greiferbacken innerhalb des Formgreifers ausgetauscht werden können.

Alternativ kann vorgesehen sein, dass die Greiferbacken unbeweglich gegenineinander sind. In diesem Fall erfolgt das Formen durch die reine Aufnahme des Schnittguts in die formgebende Aufnahme. Ob die Greiferbacken gegeneinander bewegbar ausbildet sind oder unbewegbar, kann beispielsweise durch Eigenschaften des Schnittguts und die gewünschte Form bestimmt sein.

In einer Ausführungsform der Erfindung, die mit jeder anderen zuvor genannten oder noch zu nennenden Ausführungsform kombiniert werden kann, sofern es nicht im Widerspruch zueinandersteht, ist der Formgreifer als ein Winkelgreifer oder als ein Parallelgreifer ausgebildet. Besonders bevorzugt ist der Formgreifer als ein Parallelgreifer ausgebildet.

In einer Ausführungsform der Erfindung, die mit jeder anderen zuvor genannten oder noch zu nennenden Ausführungsform kombiniert werden kann, sofern es nicht im Widerspruch zueinandersteht, sind die Greiferbacken so ausgebildet und zueinander angeordnet, dass sie an dem distalen Ende des Formgreifers eine kegelförmige Aufnahme bilden.

Diese Form ist besonders geeignet, Schabgut von einem Käseblock in eine Rosettenform zu bringen.

Eine kegelförmige Aufnahme ist besonders gut für die Bildung Rosetten, beispielsweise von Käse-Rosette, geeignet. Die Form kann zwar bereits durch die Wahl der Anordnung des Messers (beispielsweise als ein Schaber) bei Abschneiden bereits in einem ersten Schritt beeinflusst werden. Der Formgreifer kann dann das vorgeformte Schnittgut in eine standardisierte Form und Grösse bringen, also beispielsweise in eine standardisierte Rosettenform. Auf diese Weise kann formmässig standardisiertes Schnittgut (hier Rosetten) in die entsprechende Verpackung eingelegt werden. Kegelförmig umschliesst auch eine Kegelstumpf-Form. Alternative Formen der Aufnahme, zum Beispiel ein Kreiszylinder, ein elliptischer Zylinder, oder prismenförmige Zylinder können ebenfalls vorgesehen sein. Die Form kann auf einer geraden oder einer schiefen Grundform basieren.

Die Anordnung der kegelförmigen Aufnahme am distalen Ende erleichtert das Formen des Schnittguts. So kann das mit dem Messer abgeschnittene Gut unmittelbar nach dem Abtrennvorgang in den geöffneten Formgreifer fallen und dort auch durch Schliessen des Formgreifers in die gewünschte Form gebracht werden. Vorzugsweise erstreckt sich der Aufnahmekegel mit seiner Höhengerade entlang der Geraden des distalen Endes. Am distalen Ende des Formgreifers befindet sich also sowohl das spitzere Ende und auch das breitere Ende des Aufnahmekegels.

In einer Ausführungsform der Erfindung, die mit jeder anderen zuvor genannten oder noch zu nennenden Ausführungsform kombiniert werden kann, sofern es nicht im Widerspruch zueinandersteht, umfasst der Formgreifer einen Abwerfer mit einer Auflagefläche für Schnittgut. Der Abwerfer ist dabei in der Aufnahme und in Richtung des distalen Endes des Formgreifers hin und zurück bewegbar ausgebildet. Der Abwerfer kann optional zudem an dem distalen Ende des Formgreifers aus diesem hinaus bewegbar ausgebildet sein.

In dieser Ausführungsform begrenzt damit der Abwerfer mit seiner Auflagefläche die Aufnahme zwischen den Greiferbacken, und zwar an der dem distalen Ende gegenüberliegenden Seite. Mittels des Abwerfers kann ein Lebensmittelabschnitt, der in der Aufnahme des Formgreifers liegt, aus dem Formgreifer ausgestossen werden. Das Ausstossen passiert, indem sowohl der Formgreifer in den geöffneten Zustand gebracht und der Ausstosser in Richtung distales Ende bewegt wird. Das auf der Auflagefläche des Abwerfers liegende Lebensmittelgut wird damit aus der Aufnahme herausgehoben.

Es kann dabei vorgesehen sein, dass bei der Bewegung des Ausstossers in Richtung distalem Ende die Auflagefläche zum Beispiel bis bündig mit dem distalen Ende des Formgreifers bewegt oder sogar noch weiter über das distale Ende hinausbewegt wird, so dass das Schnittgut noch besser aus dem Formgreifer ausgestossen wird.

Es kann vorgesehen sein, dass die Auflagefläche des Abwerfers an die Form der Aufnahme zwischen den Greiferbacken angepasst ist und somit zusätzlich die Formung des Schnittguts in dem Formgreifer beeinflusst. Ist beispielsweise die Aufnahme des Formgreifers kegelförmig, kann die Auflagefläche die Kegelform in Richtung proximal vervollständigen - so kann sich beispielsweise die Mantelfläche parallel zu der Gerade des distalen Endes erstrecken, während sich die gedachte Grundfläche des Kegels zwischen dem distalen und proximalen Ende erstreckt. Die Auflagefläche kann also die Aufnahme an der dem distalen Ende gegenüberliegenden Seite im Wesentlichen passgenau abschliessen.

In einer Ausführungsform der Erfindung, die mit jeder anderen zuvor genannten oder noch zu nennenden Ausführungsform kombiniert werden kann, sofern es nicht im Widerspruch zueinandersteht, ist zumindest eine, bevorzugt beide Greiferbacken am distalen Ende des Formgreifers fingerförmig mit einer Aussparung zwischen jedem Finger ausbildet. Optional kann der Abwerfer fingerförmige Verlängerungen umfassen, welche in die Aussparungen zwischen den Fingern der Greiferbacken eingreifen.

Die Fingerform am distalen Ende der Greiferbacken spart nicht nur Material, sie verringert zudem die Fläche, an welcher das Schnittgut haften bleiben kann. So kann das Handling des Schnittguts mit dem Formgreifer verbessert werden, insbesondere beim Abgeben des Schnittguts aus dem Formgreifer. Ist der Abwerfer ebenfalls mit Fingern ausgestattet, welche in die Aussparungen der Greiferbacken-Finger eingreifen, kann das Handling des Schnittguts weiter verbessert werden. Zum Beispiel kann das Schnittgut besser in der Aufnahme bewegt werden, ohne dass es an der Grenze zwischen Innenseite der Greiferbacke und Auflagefläche des Abwerfers eingeklemmt wird, und die Gefahr des Verkantens des Abwerfers selbst beim Bewegen zwischen den Greiferbacken ist verringert.

Es kann zudem vorgesehen sein, dass der Formgreifer an einer oder an beiden Seiten zwischen dem distalen und proximalen Ende der Greiferbacken ein Begrenzungselement aufweist, welches die Aufnahme des Formgreifers begrenzt. Ist zum Beispiel die Aufnahme kegelförmig ausgebildet, kann ein Begrenzungselement zumindest an dem grösseren Ende des Kegels (der gedachten Grundfläche) angebracht sein. So kann verhindert werden, dass bei einer Bewegung des Formgreifers das eingelegte Schnittgut seitlich herausfällt, selbst wenn der Formgreifer in einem geschlossenen Zustand ist. Ein weiteres Begrenzungselement kann an dem engeren Ende der kegelförmigen Aufnahme angebracht sein. Dies kann insbesondere dann der Fall sein, wenn die Aufnahme eher kegelstumpfförmig ausgebildet ist. Unabhängig von der Form der Aufnahme ist das eine oder zwei Begrenzungselemente lateral von der Aufnahme vorgesehen. Es kann vorgesehen sein, dass es unbeweglich am Formgreifer angebracht ist.

In einer Ausführungsform der Erfindung, die mit jeder anderen zuvor genannten oder noch zu nennenden Ausführungsform kombiniert werden kann, sofern es nicht im Widerspruch zueinandersteht, ist die Aufnahme mit einer Rotationsgeschwindigkeit um die erste Rotationsachse drehbar ausgebildet. Dabei umfasst die Schneide- und Form-Anlage zum Drehen der Aufnahme um die erste Rotationsachse einen Aufnahme-Antrieb. Dieser Aufnahme-Antrieb wird von der Steuerung kontrolliert.

Es kann insbesondere vorgesehen sein, dass in dieser Ausführungsform die erste Rotationsachse senkrecht zu der Auflagefläche der Aufnahme.

Mittels des Aufnahme-Antriebs kann die Aufnahme kontrolliert und automatisiert um die erste Rotationsachse rotiert werden. Ein geeigneter Aufnahme-Antrieb kann beispielsweise sein: ein Servomotor-gesteuerter Antrieb, ein Drehstrommotor (beispielsweise mit 230V oder 400V), oder ein pneumatisches Drehmodul. Der Rotationsantrieb wird mittels der Steuerung kontrolliert. Insbesondere ist die Steuerung funktionell derart mit dem Aufnahme-Antrieb verbunden, dass die Steuerung die Rotationsgeschwindigkeit der Aufnahme kontrollierten kann. Dies schliesst nicht nur das Rotieren selbst ein, sondern auch den Beginn und das Ende der Rotation. So ist es ebenfalls unter der Kontrolle der Steuerung, ob die Aufnahme nicht rotiert, wobei in diesem Fall die Rotationsgeschwindigkeit = 0 ist.

Eine insbesondere für die Herstellung von Tête de Moine Rosetten geeignete Geschwindigkeit kann beispielsweise bei 400 bis 500 Umdrehungen pro Minute (U/min) liegen.

Für eine Drehbarkeit um die erste Rotationsachse ist die Aufnahme drehbar gelagert.

Ist die Aufnahme um die erste Rotationsachse drehbar ausgebildet, kann es vorgesehen sein, dass das Messer rotationsfest gegenüber der ersten Rotationsachse ausgebildet ist. Alternativ ist es möglich, wenn auch anlagentechnisch weniger wünschenswert, dass nicht nur die Aufnahme sondern auch das Messer rotierbar um die erste Rotationsache ausgebildet ist. In diesem Fall muss die Rotation der Aufnahme und die Rotation des Messers gegeneinander ablaufen, um Schnittgut von einem auf die Aufnahme aufgesetzten Käseblock abzutrennen. Das Positionieren des Formgreifens zum Aufnehmen des Schnittguts ist in diesem Fall entsprechend zeitlich und örtlich auf die Bewegung von Messer und Aufnahme abzustimmen.

Alternativ kann es vorgesehen sein, dass nur das Messer um die erste Rotationsachse rotierbar ausgebildet ist, während die Aufnahme rotationsfest ist. Auch in dieser Ausführungsform kann durch die Relativbewegung zwischen Messer und Aufnahme Schnittgut von einem auf die Aufnahme positionierten Lebensmittelblock abgeschnitten werden.

In einer Ausführungsform der Erfindung, die mit jeder anderen zuvor genannten oder noch zu nennenden Ausführungsform kombiniert werden kann, sofern es nicht im Widerspruch zueinandersteht, sind das Messer und der Formgreifer parallel zu der ersten Rotationsachse bewegbar ausgebildet. In diesem Fall ist die Steuerung ausgebildet, die Bewegung des Messers und des Formgreifers parallel zu der ersten Rotationsachse zu steuern.

Insbesondere kontrolliert die Steuerung eine Bewegung des Messers in Richtung der Aufnahme oder von ihr weg, insbesondere entlang der ersten Rotationsachse. Auch kontrolliert die Steuerung eine entsprechende Bewegung des Formgreifers in Richtung der Aufnahme und von ihr weg. Schliesslich koordiniert die Steuerung die Bewegung des Messers und der Formgreifers in Relation zueinander, und zwar bezüglich des zeitlichen Ablaufs und ihrer Positionen zueinander.

Über eine koordinierte Rotation der Aufnahme und der Bewegung des Messers kann die Dicke des abzuschneidenden Schnittguts beeinflusst werden. Beispielsweise kann für die Herstellung von Rosetten eines halbharten Käses wie einem Tête de Moine-Käse durch die Rotationsgeschwindigkeit der Aufnahme und einem Vorschub des Messers in Richtung Aufnahme pro ganzer Umdrehung der Aufnahme eine definierte Einstechtiefe in einen aufgesetzten Käselaib erzielt werden. Beispielhaft genannt ist eine VorschubBewegung des Messers in Richtung Aufnahme von 0.1 mm bis 10 mm pro ganzer Umdrehung der Aufnahme, mit welcher von einem Halbhartkäse wie einem Tête de Moine-Käse mit einem Durchmesser von 5 cm bis 30 cm bei einer Drehzahl mit der Aufnahme von 300 bis 800 Umdrehungen pro Minute Rosetten mit einem Gewicht zwischen 6 und 60 g abgeschabt werden.

Auch wenn die Position des Messers entlang der ersten Rotationsachse (also durch eine Bewegung die parallel zu der ersten Rotationsachse geführt ist) veränderbar ist, kann es vorgesehen sein, dass der Abstand des Messers gegenüber der ersten Rotationsachse (senkrecht gesehen zu der ersten Rotationsachse) gleichbleibend ist. Insbesondere ist vorgesehen, dass das Messer in einem festbleibenden Abstand zu der ersten Rotationsachse angeordnet ist, so dass es nicht mit seiner Schneidekante die erste Rotationsachse durchläuft.

Es kann vorgesehen sein, dass das Messer mit seiner Schneidekante in Bezug auf seinen Abstand zu der ersten Rotationsachse konstant positioniert ist.

In einer Ausführungsform der Erfindung, die mit jeder anderen zuvor genannten oder noch zu nennenden Ausführungsform kombiniert werden kann, sofern es nicht im Widerspruch zueinandersteht, umfasst die Schneide- und Formanlage einen Messerantrieb, mit welchem das Messer parallel zu der ersten Rotationsachse bewegt wird. Ebenfalls umfasst die Schneide- und Formanlage einen Formgreifer-Antrieb, mit welchem der Formgreifer parallel zu der ersten Rotationsachse bewegt wird.

Die Steuerung ist ausgebildet, über eine Kontrolle des Messerantriebs und eine Kontrolle des Formgreifer-Antriebs die Bewegungen des Messers entlang der ersten Rotationsachse und des Formgreifers entlang der ersten Rotationsachse zu kontrollieren und sie miteinander zu koordinieren.

Der Messerantrieb kann beispielsweise ein Servomotor sein, welcher ein inkrementelles Wegmesssystem aufweist. Die Steuerung ist signaltechnisch mit dem Servomotor verbunden und kann so die Position des Messers beispielsweise gegenüber der Aufnahme bestimmen und entsprechend steuern. Es kann sich beispielsweise um einen servomotorgesteuerten Linearantrieb handeln, oder alternativ um einen pneumatischen oder elektromagnetischen Linearantrieb.

Der Antrieb zum Bewegen des Formgreifers entlang der ersten Rotationsachse kann beispielsweise ein elektrischer Direktantrieb, ein pneumatischer Antrieb oder ein hydraulischer Antrieb, gegebenenfalls mit Rotationsmodul.

In einer Ausführungsform der Erfindung, die mit jeder anderen zuvor genannten oder noch zu nennenden Ausführungsform kombiniert werden kann, sofern es nicht im Widerspruch zueinandersteht, ist der Formgreifer an einer Drehvorrichtung befestigt. Die Drehvorrichtung ist Teil der Schneide- und Formanlage. Mittels der Drehvorrichtung kann der Formgreifer gegenüber der ersten Rotationsachse bewegt werden. Dazu ist die Drehvorrichtung mit einem Drehvorrichtungs-Antrieb wirkverbunden.

Es kann dabei vorgesehen sein, dass der Formgreifer zusammen mit der Drehvorrichtung parallel zu der ersten Rotationsachse bewegbar ist. Er ist also in diesem Fall axial geführt in der Schneide- und Formanlage aufgehängt.

Mittels der Drehvorrichtung kann der Formgreifer weg von der ersten Rotationsachse bewegt werden. Die Drehvorrichtung kann beispielsweise als ein Drehrad ausgebildet sein, welches einen oder mehrere Plätze zum Anbringen des Formgreifers aufweist. Es kann hier vorgesehen sein, dass der Formgreifer selbst unbewegbar gegenüber der Drehvorrichtung an dieser befestigt ist. Die Drehvorrichtung selbst ist um eine eigene, zweite Rotationsachse bewegbar ausgebildet.

Die Bewegung des Formgreifers um eine zweite Rotationsachse kann beispielsweise eine Drehbewegung oder eine Kippbewegung sein

Ein geeigneter Aufnahme-Antrieb kann beispielsweise sein: ein Servomotor-gesteuerter Antrieb, ein Drehstrommotor (beispielsweise mit 230V oder 400V), oder ein pneumatisches Drehmodul. Der Drehvorrichtungsantrieb wird mittels der Steuerung kontrolliert.

In einer Ausführungsform der Erfindung, die mit jeder anderen zuvor genannten oder noch zu nennenden Ausführungsform kombiniert werden kann, sofern es nicht im Widerspruch zueinandersteht, ist die Drehvorrichtung als ein kreuzförmiges Drehrad mit Verbindungsplätzen für vier Formgreifer ausgebildet. Dabei ist jeweils ein Formgreifer an einem Kreuzarm-Ende angeordnet.

In dieser oder auch in anderen Ausführungsformen kann ein Formgreifer in der Schneide- und Formanlage austauschbar sein. Ein austauschbarer Formgreifer hat den Vorteil, dass für eine gewünschte Schnittgut-Form ein Formgreifer mit einer entsprechend geformten Aufnahme verwendet wird. Dazu kann es vorgesehen sein, dass zum Beispiel nur die Greiferbacken, welche die Aufnahme formen, ausgetauscht werden, oder es werden weitere Elemente des Formgreifers zusätzlich mit ausgetauscht. Die Austauschbarkeit kann beispielsweise durch reversible Befestigungssysteme erreicht werden. Beispielhaft genannt sind Schraub- oder Stiftverbindungen, oder Kraftschluss-Verbindungen.

In einer Ausführungsform der Erfindung, die mit jeder anderen zuvor genannten oder noch zu nennenden Ausführungsform kombiniert werden kann, sofern es nicht im Widerspruch zueinandersteht, erstreckt sich die Schneidekante des Messers senkrecht zu der ersten Rotationsachse. Zudem ist die Schneidekante neben der ersten Rotationsachse angeordnet.

In dieser Ausführungsform bilden die Schneidekante des Messers und die erste Rotationsachse einen 90° Winkel.

In dieser Ausführungsform verläuft zudem die Rotationsachse nicht durch die Schneidekante des Messers. Es kann aber möglich sein, dass ein Ende der Schneidekante auf der ersten Rotationsachse liegt.

Alternativ kann es vorgesehen sein, dass sich die Schneidekante des Messers in einem Winkel zu der ersten Rotationsachse erstreckt, welcher kleiner oder grösser ist als 90°. Vorzugsweise ist in dieser alternativen Ausführungsform die Schneidekante des Messers in einem Winkel kleiner 90° zu der ersten Rotationsachse angeordnet. Auch in diesen alternativen Varianten verläuft zudem die Rotationsachse nicht durch die Schneidekante des Messers. Es kann aber möglich sein, dass ein Ende der Schneidekante auf der Rotationsachse liegt.

In einer Ausführungsform der Erfindung, die mit jeder anderen zuvor genannten oder noch zu nennenden Ausführungsform kombiniert werden kann, sofern es nicht im Widerspruch zueinandersteht, ist die Auflagefläche der Aufnahme tellerförmig und erstreckt sich senkrecht zu der ersten Rotationsachse.

In einer Ausführungsform der Erfindung, die mit jeder anderen zuvor genannten oder noch zu nennenden Ausführungsform kombiniert werden kann, sofern es nicht im Widerspruch zueinandersteht, umfasst die Aufnahme ein oder mehrere Halteelemente, welche zumindest auf der Auflagefläche zum Halten eines auf die Aufnahme aufzusetzenden Lebensmittel-Blocks angeordnet sind.

In einer Ausführungsform der Erfindung, die mit jeder anderen zuvor genannten oder noch zu nennenden Ausführungsform kombiniert werden kann, sofern es nicht im Widerspruch zueinandersteht, ist ein solches Halteelement ausgewählt aus einer Gruppe, welche umfasst:
- einen Steg, der sich von der Aufnahme in Richtung Hobelmesser erstreckt. Der Steg kann sich zudem um die erste Rotationsachse umlaufend erstrecken oder radial von der ersten Rotationsachse weg in Richtung Aussenkante der Auflagefläche;
- einen Dorn oder Spannnagel, der sich von der Aufnahme in Richtung Hobelmesser erstreckt;
- ein Krallen- oder Greifer-Paar, das seitlich von der Auflagefläche angeordnet ist und zum Fixieren eines aufgesetzten Lebensmittelblocks diesen einspannen;
- einen Spannring. Der Spannring kann sich gemeinsam mit der Aufnahme mitdrehen, wenn diese drehbar ausgebildet ist; und
- eine Vakuum-Vorrichtung, welche zum Ansaugen eines auf die Aufnahme aufgesetzten Lebensmittel-Blocks ausgebildet ist.

In einer Ausführungsform der Erfindung, die mit jeder anderen zuvor genannten oder noch zu nennenden Ausführungsform kombiniert werden kann, sofern es nicht im Widerspruch zueinandersteht, umfasst die Schneide- und Formanlage eine Trennvorrichtung. Die Trennvorrichtung ist zum Führen von abgeschnittenem Schnittgut in den Formgreifer ausgebildet. Dazu ist die Trennvorrichtung gegenüber der ersten Rotationsachse hin- und her-bewegbar ausgebildet. Die Bewegung der Trennvorrichtung in Abhängigkeit von der Position des Messers ist von der Steuerung kontrolliert.

Insbesondere ist vorgesehen, dass die Trennvorrichtung gegenüber dem Messer, insbesondere gegenüber dessen Schneidekante positionierbar ist. Das Positionieren erfolgt über eine Hin- und Her-Bewegung. Die Schneide- und Form-Anlage umfasst zudem einen Trennvorrichtungsantrieb, mit welchem die Bewegung der Trennvorrichtung unter Kontrolle der Steuerung durchgeführt wird. Mittels eines derart gesteuerten Trennvorrichtungsantriebs kann Schnittgut, welches von einem aufgesetzten Lebensmittelblock abgeschnitten wurde, automatisiert in die Aufnahme des Formgreifers geführt werden. Die Bewegung der Trennvorrichtung kann beispielsweise eine lineare Bewegung, eine Rotationsbewegung oder eine Kippbewegung sein.

Die Trennvorrichtung unterstützt dabei das Trennen des Schnittguts von dem Lebensmittelblock. Ursächlich wird Schnittgut mithilfe des Messers von dem Lebensmittelblock abgeschnitten, und ein Abtrennen erfolgt, wenn das Messer von dem Lebensmittelblock gelöst wird. Das Lösen des Messers kann beispielsweise durch eine Rückwärtsbewegung des Messers, also eine Bewegung weg von dem Lebensmittelblock, erfolgen. Wird das Messer zurückgezogen, kann gleichzeitig die Trennvorrichtung vorgeschoben werden, so dass die Trennvorrichtung dadurch das Schnittgut vom Lebensmittelblock und falls nötig vom Messer schiebt.

Eine Trennvorrichtung ist insbesondere dann geeignet, wenn das abgeschnittene Schnittgut leicht an dem Messer hängen bleibt und dadurch die Gefahr besteht, dass es durch das Zurückziehen des Messers auseinandergerissen wird. Beispielsweise ist dies für verschiedene Käsesorten der Fall. Mithilfe der Trennvorrichtung kann Schnittgut von dem Lebensmittelblock weg von dem Messer und in den Formgreifer geführt werden. Dies kann beispielsweise auch dann von Vorteil sein, wenn die durch das Abschneiden verursachte Form des Schnittgut weitestgehend erhalten werden soll, wie es beispielsweise für abgeschabte Käserosetten bei einem Tête de Moine Käsestück der Fall sein kann.

In einer Ausführungsform der Erfindung, die mit jeder anderen zuvor genannten oder noch zu nennenden Ausführungsform kombiniert werden kann, sofern es nicht im Widerspruch zueinandersteht, ist die Trennvorrichtung blechförmig oder keilförmig und senkrecht zu der ersten Rotationsachse bewegbar ausgebildet. Oder die Trennvorrichtung ist als ein Winkelblech ausgebildet, welches gegenüber der ersten Rotationsachse kippbar ist. Dabei umfasst die Schneide- und Formanlage einen Trennvorrichtungsantrieb, mit welchem die Bewegung der Trennvorrichtung unter Kontrolle der Steuerung durchgeführt wird.

Die Bewegung der Trennvorrichtung kann beispielsweise eine lineare Hin- und Her-Bewegung sein, oder auch eine Kippbewegung, mit welcher die Trennvorrichtung gegenüber der ersten Rotationsachse positioniert wird. Insbesondere wird die Position der Trennvorrichtung in Abhängigkeit von der Position des Messers und auch in Abhängigkeit von der Position des Formgreifers gesteuert.

Alternative Formen der Trennvorrichtung sind möglich, solange sie erlauben, dass die Trennvorrichtung gegenüber dem Messer und dem Formgreifer positioniert werden kann und abgeschnittenes Schnittgut von Lebensmittelblock beziehungsweise dem Messer in Richtung Aufnahme des Formgreifers zu führen. Eine Abstreifkante, wie sie bei einer Blech- oder Keilform zum Führen verwendet wird, ist dabei nicht zwingend vorgesehen. So können alternative Formen vorgesehen sein, wenn zum Beispiel zusätzlich mittels einer Trennvorrichtung eine bestimmte Form des Schnittguts erreicht werden soll, oder wenn die Dimensionen des Lebensmittelblocks, des Messers und des Formgreifers und/oder ihrer Antriebe eine alternative Form verlangen.

Auch wenn in diesem Zusammenhang von einem Blech oder einer Blechform gesprochen wird, ist es möglich, dass die Trennvorrichtung aus einem abweichenden Material geformt ist. Ebenfalls geeignet ist beispielsweise eine Trennvorrichtung aus Kunststoff, oder eine Trennvorrichtung aus einer Kombination von Kunststoff- und Metall-Bereichen. Denkbar sind weitere Materialien wie zum Beispiel Gummi, oder folierte oder beschichtete Werkstücke, oder ähnliches. Analoges gilt für Trennvorrichtung anderer Formen wie die Keilform oder ähnliches.

In einer Ausführungsform der Erfindung, die mit jeder anderen zuvor genannten oder noch zu nennenden Ausführungsform kombiniert werden kann, sofern es nicht im Widerspruch zueinandersteht, umfasst die Aufnahme einen Zentrierdorn. Der Zentrierdorn erstreckt sich im Wesentlichen senkrecht von der Auflagefläche der Aufnahme in Richtung Hobelmesser entlang der ersten Rotationsachse.

Diese Anordnung und Ausrichtung von Zentrierdorn, Aufnahme und Rotationsachse ist besonders geeignet, um beispielsweise Rosetten eines auf die Aufnahme aufgesteckten Tête de Moine Käselaibs abzuschaben. Der Käselaib ist dabei so auf den Zentrierdorn gesteckt, so dass dieser den Käselaib auf der Aufnahme in Position hält, auch wenn die Aufnahme zum Abschaben rotiert.

Der Zentrierdorn kann einstückig mit der Aufnahme hergestellt sein, oder er kann als ein separates Werkstück hergestellt und an der Aufnahme befestigt sein. Ist der Zentrierdorn einstückig mit der Aufnahme, kann er aus demselben Material gefertigt sein. Alternativ ist es möglich, dass der Zentrierdorn aus einem anderen Material geformt ist als die Aufnahme. Geeignetes Material kann beispielsweise ein Metall oder Kunststoff sein. Die Wahl des Materials für den Zentrierdorn kann zum Beispiel aufgrund der Eigenschaften des aufzusetzenden Lebensmittelmittelblocks gewählt sein. So kann es beispielsweise vorgesehen sein, dass der Zentrierblock eine Anti-Haft-Beschichtung aufweist, oder zusätzlich oder alternativ Rückhalte-Strukturen an der Oberfläche des Zentrierdorns umfasst.

In einer Ausführungsform der Erfindung, die mit jeder anderen zuvor genannten oder noch zu nennenden Ausführungsform kombiniert werden kann, sofern es nicht im Widerspruch zueinandersteht, ist die Aufnahme mit dem Zentrierdorn aus der ersten Rotationsachse schwenkbar ausgebildet.

In dieser Ausführungsform kann das Be- und Entladen der Aufnahme mit einem Lebensmittelblock vereinfacht sein.

In einer Ausführungsform der Erfindung, die mit jeder anderen zuvor genannten oder noch zu nennenden Ausführungsform kombiniert werden kann, sofern es nicht im Widerspruch zueinandersteht, umfasst die Schneide- und Formanlage eine Überwachungsvorrichtung, mit welcher die Anwesenheit eines auf die Aufnahme positionierten Lebensmittel-Blocks detektierbar ist. Die Überwachungsvorrichtung wird mittels der Steuerung kontrolliert.

Eine solche Überwachungsvorrichtung ist insbesondere für Ausführungsformen vorgesehen, in welchen die Aufnahme um die erste Rotationsachse drehbar ausgebildet ist.

Zum Detektieren, ob ein Lebensmittelblock auf der Aufnahme anwesend ist oder nicht sind verschiedene Überwachungsvorrichtung denkbar. Beispielsweise kann eine geeignete Überwachungsvorrichtung ein kapazitiver Sensor, ein Reedschalter, ein optischer Sensor, Lichtschranke oder Lichttaster, Abstandssensor oder Näherungssensor sein oder einen oder mehrere solcher Sensoren zum Detektieren der Anwesenheit eines Lebensmittelblocks umfassen und zusätzliche, zum Beispiel mechanische Elemente aufweisen. Dies kann beispielsweise ein Bolzen mit Federrückstellung sein, welcher über die Auflagefläche hinausragt, und durch einen aufgesetzten Lebensmittelblock von diesem nach hinten geschoben wird. In einer solchen Detektionsposition kann der Bolzen von einem Sensor erkannt werden. Ebenfalls möglich ist beispielsweise eine Vakuum-Detektionsvorrichtung, mit welcher mittels eines aufgesetzten Lebensmittelblocks ein Vakuum an der Unterseite des Lebensmittelblocks entstehen kann, welches wiederum mittels eines Sensors detektierbar ist. Weiterhin möglich ist eine Überwachungsvorrichtung mit einem Detektionsrad, wie sie später beschrieben ist.

Es kann insbesondere vorgesehen sein, dass mittels einer Überwachungsvorrichtung nicht nur die Anwesenheit eines Lebensmittelblocks selbst detektierbar ist, sondern dass zudem ein fehlerhafter Lebensmittelblock, der sich nicht (mehr) gleichmässig auf der Aufnahme dreht, detektiert werden kann.

In einer Ausführungsform der Erfindung, die mit jeder anderen zuvor genannten oder noch zu nennenden Ausführungsform kombiniert werden kann, sofern es nicht im Widerspruch zueinandersteht, umfasst die Überwachungsvorrichtung ein Detektionsrad, welches um eine dritte Rotationsachse rotierbar ausgebildet. Dabei verläuft die dritte Rotationsachse parallel zu der ersten Rotationsachse. Zudem ist das Detektionsrad mit seiner dritten Rotationsachse parallel gegenüber und senkrecht zu der ersten Rotationsachse bewegbar ausgebildet.

Das Detektionsrad wird in dieser Ausführungsform dazu verwendet, zu kontrollieren, ob ein auf die Aufnahme aufgesetzter Lebensmittelblock im laufenden Betrieb der Schneide- und Form-Anlage korrekt dreht. Dazu kann das Detektionsrad so weit in Richtung erste Rotationsachse bewegt werden, dass es den Lebensmittelblock beaufschlägt. Es kann vorgesehen sein, den Aufschlagdruck zu kontrollieren, indem der Weg des Detektionsrads in Richtung Rotationsachse und in Abhängigkeit von dem Umfang des Lebensmittelblocks kontrolliert wird, beispielsweise mittels einer Steuerung. Der Druck ist dabei so gewählt, dass, wenn der Lebensmittelblock durch die Aufnahme gedreht wird, der Lebensmittelblock wiederum das Detektionsrad dreht. Das Detektionsrad läuft damit mit der Rotation des Lebensmittelblocks mit, und zwar gegenläufig. Ist der Lebensmittelblock intakt und dreht auf der Aufnahme wie vorgegeben, dreht sich damit das Detektionsrad analog. Ist dagegen der Lebensmittelblock zum Beispiel gebrochen, ist die Drehung des Detektionsrads verändert. Dies kann wiederum entweder von Bedienungspersonal oder auch von einer Sensorik detektiert werden, und es kann der Herstellungsprozess zum Beispiel angehalten werden, beispielsweise durch das Stoppen der Drehung der Aufnahme.

In einer Ausführungsform der Erfindung, die mit jeder anderen zuvor genannten oder noch zu nennenden Ausführungsform kombiniert werden kann, sofern es nicht im Widerspruch zueinandersteht, umfasst die Überwachungseinheit eine Sensorik, mit welcher eine Rotation des Detektionsrads detektierbar ist.

Es kann vorgesehen sein, dass mittels der Sensorik die Rotation des Drehrades detektiert wird, wie oben angedeutet. Geeignete Sensoren können beispielsweise optische Sensoren wie Lichtschranken oder Lichttaster sein, oder auch Näherungssensoren, die zum Beispiel auf dem Prinzip der Induktion beruhen, oder Reedschalter.

Lichtschranken können beispielsweise ausgewählte Strukturen des Detektionsrads, die sich durch eine Drehung verändern, detektieren. Beispielhaft erwähnt seien hier Speichen im Detektionsrad, oder ein mit dem Detektionsrad gekoppelte, asymmetrische Signalgeber, wie z.B. eine metallische Halbscheibe oder andere, alternative asymmetrisch geformte Signalgeber, die sich gemeinsam mit dem Detektionsrad drehen. Dies kann zum Beispiel erzielt werden, indem die Halbscheibe auf der gleichen Rotationsachse befestigt ist wie das Drehrad. Die Sensorik ist derart angeordnet, dass sie die Drehung der Halbscheibe überwacht: passiert die Halbscheibe bei der Drehung den Sensorbereich, empfängt der Sensor ein Signal. Befindet sich die Halbscheibe ausserhalb des Sensorbereichs, empfängt der Sensor kein Signal. Für einen solchen Detektionsaufbau ist beispielsweise alternativ ebenfalls ein kapazitiver Sensor geeignet.

Bei einer ordnungsgemässen Drehung des aufgesetzten Lebensmittelblocks empfängt der Sensor in zeitlich regelmässigen Abständen ein Signal, welches er an die Steuerung weitergibt. In der Steuerung ist hinterlegt, in welchem Takt der Lebensmittelblock ordnungsgemäss dreht.

Weicht die von dem Sensor detektierte Drehung der Halbscheibe von einer ordnungsgemässen Drehung ab, kann die Steuerung eine Veränderung in den detektieren Signalen des Sensors erkennen. Ist beispielsweise der Lebensmittelblock gebrochen oder hat sich von der Aufnahme gelöst, dreht das Detektionsrad nicht mehr oder nicht mehr korrekt, werden abweichende Sensorsignale an die Steuerung weitergeleitet. Die Steuerung kann dann auslösen, dass das Detektionsrad von der Aufnahme beziehungsweise dem aufgesetzten Lebensmittelblock wegbewegt wird und/oder die Aufnahme nicht mehr gedreht wird.

Eine derart ausgebildete Sensorik mit Detektionsrad ist insbesondere für die Verwendung eines Käseblocks, zum Beispiel eines Tête de Moine Blocks, geeignet.

Alternativ kann es möglich sein, die Überwachungseinheit derart auszubilden, dass zusätzlich die Drehrichtung des Lebensmittel-Blocks detektiert werden kann, beispielsweise mittels asymmetrisch ausgebildeten Signal-Auslöser in der Sensorik.

Alternativ kann beispielsweise mit einem Lasersensor der Abtrennprozess an der Oberseite des Lebensmittelblocks kontrolliert werden, indem der Lasersensor jeweils mit einem definierten Abstand zu der Oberkante im Prozess mitläuft. Solange der Abstand des Laserstrahls zu der Oberkante bestehen bleibt, ist bestätigt, dass ein Abtrennen von Schnittgut von dem Lebensmittelblock stattfindet. Trifft jedoch beispielsweise der Laserstrahl auf den Lebensmittelblock, kann dies ein Hinweis dafür sein, dass der Lebensmittelblock nicht mit der Aufnahme mitdreht und so das Messer kein Schnittgut abtrennen kann. Ein so platzierter Sensor detektiert damit einen fehlerhaften Materialabtrag.

In einer Ausführungsform der Erfindung, die mit jeder anderen zuvor genannten oder noch zu nennenden Ausführungsform kombiniert werden kann, sofern es nicht im Widerspruch zueinandersteht, umfasst die Überwachungsvorrichtung einen Laser, welcher positionsfest mit dem Messer oder dem Messerantrieb verbunden ist, und welcher auf einen Laserpunkt ausgerichtet ist, der sich bei aufgesetztem Lebensmittelblock und bei korrektem Abtrennen mit dem Messer oberhalb der Oberseite des Lebensmittelblocks befindet.

In dieser Ausführungsform würde der Laser statt des Laserpunkts die Oberseite des Lebensmittelblocks detektieren, wenn beispielsweise der Lebensmittelblock auf der Aufnahme durchdreht und entsprechend mit dem Messer kein Schnittgut abgetrennt werden kann. In dieser Situation würde das Messer bei fortlaufendem Betrieb in den Lebensmittelblock geführt werden, da er durch die fehlende Abtrennung von Schnittgut nicht verkleinert wird. Entsprechend bleibt die Oberseite auf gleicher Höhe. Durch die positionsfeste Koppelung des Lasers mit dem Messer wird der Laser ebenfalls weiter in Richtung Aufnahme geführt, was dazu führt, dass der Laserpunkt nicht oberhalb der Oberseite des Lebensmittelblocks liegt, sondern in dem Lebensmittelblock. Der Laser detektiert damit bei fehlendem Abschnitt den Lebensmittelblock statt eines leeren Punktes, was die Steuerung signaltechnisch auswerten kann.

In einer Ausführungsform der Erfindung, die mit jeder anderen zuvor genannten oder noch zu nennenden Ausführungsform kombiniert werden kann, sofern es nicht im Widerspruch zueinandersteht, umfasst die Schneide- und Formanlage ein Halteelement auf der Aufnahme, welches als eine Vakuum-Vorrichtung zum Ansaugen eines auf die Aufnahme aufgesetzten Lebensmittel-Blocks ausgebildet. Die Vakuum-Vorrichtung umfasst dabei zumindest einen Vakuum-Sensor zum Detektieren eines Vakuums an der Aufnahme. Ein solche Kombination aus Vakuum-Vorrichtung und Vakuum-Sensor kann dabei auch als eine Überwachungsvorrichtung dienen, da die Steuerung bei angelegtem Vakuum erkennen kann, dass ein Lebensmittel-Block aufgesetzt ist, während sie rückschliessen kann, dass kein Lebensmittel-Block aufsitzt (oder nicht korrekt aufgesetzt ist), wenn kein Vakuum entsteht.

Mit einer solchen Vakuum-Vorrichtung kann sichergestellt werden, dass ein auf die Aufnahme aufgesetzter Lebensmittelblock auf der Aufnahme bleibt, auch wenn diese für den Arbeitsbetrieb rotiert. Eine Vakuum-Vorrichtung kann dabei in Ergänzung oder in Alternative zu anderen Haltelementen, wie sie zuvor besprochen wurden, umfasst sein. Beispielsweise kann vorgesehen sein, dass mittels der Vakuum-Vorrichtung der Lebensmittelblock an sich auf der Aufnahme gehalten wird, während zusätzliche Halteelemente auf der Auflagefläche der Aufnahme vorgesehen sind, mit welchen der Lebensmittelblock in der gewünschten Position auf der Auflagefläche gehalten wird.

Es kann geeignet sein, für einen gesicherten Betrieb sowohl die Vakuum-Vorrichtung als auch die Detektionsvorrichtung mit Sensorik in eine Schneide- und Form-Anlage einzubauen.

In einer Ausführungsform der Erfindung, die mit jeder anderen zuvor genannten oder noch zu nennenden Ausführungsform kombiniert werden kann, sofern es nicht im Widerspruch zueinandersteht, ist Schneide- und Formanlage zum automatisierten Herstellen von geformten Tête de Moine Rosetten ausgebildet.

Die oben besprochenen, verschiedenen Elemente und Ausführungsformen einer Schneide- und Formanlage sind bereits beispielhaft für den Betrieb der Anlage mit einem Schabe-Messer und einem Formgreifer, der speziell an eine Rosettenform angepasst ist, erläutert. Insbesondere ist die Ausrichtung des Messers, in welcher die Schneidekante senkrecht zu der ersten Rotationsachse verläuft und zudem zum Abschneiden parallel zu der ersten Rotationsachse bewegbar ist, besonders für das Abschaben von Tête de Moine Rosetten geeignet. Dazu ist die Aufnahme des Formgreifer kegelstumpfförmig ausgeformt.

Ein beispielhafter Formgreifer zum automatisierten Herstellen von geformten Tête de Moine Rosetten in einer oder mehreren Ausführungsformen der Schneide- und Formmaschine, die oben genauer beschrieben ist, umfasst zumindest zwei gegeneinander bewegbare Greiferbacken mit jeweils einer Innenseite. Wie zuvor besprochen bilden so die Greiferbacken mit ihren Innenseiten gemeinsam eine Tête de Moine Rosetten - formende Aufnahme. Der Greifer wird alleine nicht beansprucht.

In einer beispielhaften Variante ist der Formgreifer an einer Drehvorrichtung befestigt. Die Merkmale und Varianten der Drehvorrichtung, die im Zusammenhang mit der Schneide- und Formmaschine zuvor beschrieben wurde, sind auch in diesem Zusammenhang zutreffend. Mittels der Drehvorrichtung ist der Formgreifer gegenüber der ersten Rotationsachse der Schneide- und Form-Anlage bewegbar. Dabei ist die Drehvorrichtung als ein Drehrad ausgebildet, welches zwei oder mehr Halteplätze zum Befestigen weiterer Formgreifer umfasst. Das Drehrad ist mit einem Drehvorrichtungs- Antrieb in einer Ausführungsform wie zuvor beschrieben wirkverbunden.

Mittels eines solchen Drehrads kann die Herstellung einer Vielzahl von Tête de Moine Rosetten automatisiert und effizient erfolgen. So kann jeweils für jede mit dem Messer neu abgeschabte Rosette in zeitlich engem Abstand ein Formgreifer mit einer leeren Aufnahme bereitgestellt werden. Ist das Messer zurückgezogen und die Rosette in den zugeordneten Formgreifer eingeführt, kann der nun belegte Formgreifer mittels des Drehrads von der "aktiven", messernahen Position weggedreht werden und unmittelbar ein neuer, leerer Formgreifer in die aktive Position geschwenkt werden. So kann unmittelbar anschliessend das Messer wieder in den Käselaib einstechen und die nächste Rosette abschaben, ohne dass abgewartet werden muss, dass der ursprünglich belegte Formgreifer die aufgenommene Rosette in ihre Endform bringt, abgibt (zum Beispiel in eine vorbereitete Schale) und wieder in die aktive Position gebracht wird.

Es kann beispielsweise vorgesehen sein, ein Greiferrad mit vier kreuzweise angeordneten Formgreifern in der Schneide- und Form-Anlage für Tête de Moine Rosetten einzubauen. Jeweils durch eine 90°-Drehung des Greiferrads kann ein leerer Formgreifer am Messer in die aktive Position geschwenkt werden. Die Zeitspanne zwischen jedem Messereinschnitt in den Käselaib zum Abdrehen einer Rosette kann so auf die Zeit minimiert werden, die für die 90°-Drehung benötigt wird.

Die Merkmale der oben erwähnten Ausführungsformen der Schneide- und Formanlage können in jeder möglichen Kombination miteinander verwendet werden, solange sie nicht einander widersprechen. Die erfindungsgemässe Schneid-und Formanlage wird durch Anspruch 1 definiert. Bereichsangaben schliessen die genannten Grenzwerte mit ein.

Die Erfindung betrifft zudem ein Verfahren zum Herstellen von geformten Schnittgut eines Lebensmittelblocks, wie in Anspruch 12 definiert.

Es umfasst die folgenden Schritte:
Bereitstellen einer Schneide- und Form-Anlage in einer der zuvor beschriebenen Ausführungsformen oder einer Kombination davon. Es kann dabei vorgesehen sein, neben der Aufnahme, dem Formgreifer und dem Messer je nach Bedarf weitere hier beschriebene Elemente in die Schneide- und Formanlage zu integrieren.

Aufsetzen eines Lebensmittel-Blocks auf die Auflagefläche der Aufnahme. Je nach Ausbildung der Auflagefläche kann für eine Verbesserung des Halts des Lebensmittel- Blocks vorgesehen sein, ein oder mehrere Halteelemente auf oder an der Auflagefläche bereitzustellen.

Bewegen des Messers und/oder der Aufnahme unter Kontrolle der Steuerung aufeinander zu, bis das Messer in eine Oberseite des aufgesetzten Lebensmittel-Blocks einsticht. Die Einstichtiefe bestimmt dabei die Dicke des abgetrennten Schnittguts. Sie kann je nach gewünschter Form und Art des zu bearbeitenden Lebensmittels variieren und beispielsweise in der Steuerung hinterlegt sein. Es kann vorgesehen sein, dass beispielsweise durch die entsprechende Auswahl der Art des Lebensmittelblocks die Steuerung Einstellungen wie Bewegung des Messers (für die Einstichtiefe), Zeit des Einstechens und Bewegung des Messers während des Abtrenn-Vorgangs (für die Länge des Schnittguts), Drehzahl der Aufnahme und ähnliches durch die Steuerung automatisiert ausgelöst werden.

Auslösen einer Rotationsbewegung der Aufnahme um die erste Rotationsachse und kontinuierliches Bewegen des Messers und/oder der Aufnahme aufeinander zu, dadurch Abschneiden eines Schnittguts von der Oberseite des aufgesetzten Lebensmittel-Blocks. Es kann vorgesehen sein, dass das Messer kontinuierlich in Richtung Aufnahme bewegt wird, um ein kontinuierliches Einstechen in den Lebensmittelblock zu gewährleisten. Das Einstechen kann beispielsweise mittels weiterer Sensoren überprüft werden.

Positionieren des Formgreifers gegenüber der Oberfläche des aufgesetzten Lebensmittel-Blocks, sowie Aufnehmen Greifen des Schnittguts in den Formgreifer, wodurch das Schnittgut geformt wird. Es kann dabei vorgesehen sein, dass zur sicheren Aufnahme des Schnittguts der Formgreifer auch gegenüber dem Messer, insbesondere dessen Schneidekante positioniert wird. Die Ausrichtung des Formgreifers, insbesondere der Greiferbacken und ihrer Aufnahme, kann unter Berücksichtigung verschiedener Aspekte wie der Form und Lage des frisch abgetrennten Schnittguts, Form und Dimension der Aufnahme in dem Formgreifer, sowie die Ausrichtung der Öffnung der Aufnahme, wenn die Greiferbacken auseinander bewegt sind, erfolgen. Sobald das Schnittgut in der Aufnahme des Formgreifers aufgenommen ist, werden die Greiferbacken wie oben beschrieben aufeinander zubewegt und so in einen geschlossenen Zustand gebracht. Das Schnittgut wird durch die damit einhergehende Verengung der Aufnahme geformt.

In einer Ausführungsform des Verfahrens, die mit jeder anderen zuvor genannten oder noch zu nennenden Ausführungsform kombiniert werden kann, sofern es nicht im Widerspruch zueinandersteht, wird für den Abtrennvorgang die Aufnahme um die erste Rotationsachse rotiert, und zum Einstechen wird das Messer entlang der ersten Rotationsachse in Richtung Aufnahme bewegt, bis die Schneidekante in den Lebensmittelblock einsticht. In dieser Ausrichtung von Messer zu Aufnahme kann Schnittgut effizient von dem Lebensmittel-Block abgetrennt werden, ohne zu viele Materialverluste hinnehmen zu müssen.

In einer Ausführungsform des Verfahrens, die mit jeder anderen zuvor genannten oder noch zu nennenden Ausführungsform kombiniert werden kann, sofern es nicht im Widerspruch zueinandersteht, wird zum Unterbrechen des Abschneidens von Schnittgut das Messer von dem Lebensmittel-Block wegbewegt. Es ist besonders vorteilhaft, wenn dazu das Messer wieder entlang der ersten Rotationsachse zurückgezogen, also von der Aufnahme wegbewegt wird. Es kann vorgesehen sein, die Länge der Wegstrecke für diese Rückwärtsbewegung in der Steuerung vorzugeben.

In einer Ausführungsform des Verfahrens, die mit jeder anderen zuvor genannten oder noch zu nennenden Ausführungsform kombiniert werden kann, sofern es nicht im Widerspruch zueinandersteht, umfasst der Formgreifer zwei gegeneinander bewegbare Greiferbacken. Die Greiferbacken sind während des Abschneidens von Schnittgut gegenüber dem Messer positioniert, um unmittelbar das abgetrennte Schnittgut aufzunehmen. Dazu umfassen die Greiferbacken jeweils eine Innenseite, mit welchen sie gemeinsam eine formgebende Aufnahme für von einem Lebensmittelblock abgeschnittenes Schnittgut bilden. Zum Aufnehmen von durch das Messer abgeschnittene Schnittgut werden die Greiferbacken voneinander wegbewegt, während sie zum Formen des aufgenommenen Schnittguts aufeinander zubewegt werden.

Durch das voneinander Wegbewegen wird der Formgreifer in einen geöffneten Zustand gebracht, wie zuvor beschrieben. Es kann vorgesehen sein, die Distanz, um welche die Greiferbacken voneinander in der geöffneten Position beabstandet werden, in der Steuerung zu hinterlegen. Die Distanz kann dabei an die Art des Lebensmittels und die Form und Grösse des hergestellten Schnittguts angepasst sein.

Durch das aufeinander Zubewegen wird der Formgreifer in den geschlossenen Zustand gebracht, wie ebenfalls zuvor beschrieben. Es kann vorgesehen sein, in der Steuerung zu hinterlegen, wie weit die Greiferbacken aufeinander zubewegt werden, und damit wie die Aufnahme schlussendlich im geschlossenen Zustand ist. Die Aufnahme ist dabei vorzugsweise in ihrer Form und Dimension an das herzustellende Schnittgut angepasst.

In einer Ausführungsform des Verfahrens, die mit jeder anderen zuvor genannten oder noch zu nennenden Ausführungsform kombiniert werden kann, sofern es nicht im Widerspruch zueinandersteht, umfasst der Formgreifer einen Abwerfer mit einer Auflagefläche. Schnittgut, welches in den Formgreifer aufgenommenes ist, liegt dabei auf der Auflagefläche und/oder wird mittels des Abwerfers aus dem Formgreifer abgegeben.

Die Beschreibungen zuvor oder später im Zusammenhang mit dem Abwerfer können hier ebenfalls angewendet werden.

In einer Ausführungsform des Verfahrens, die mit jeder anderen zuvor genannten oder noch zu nennenden Ausführungsform kombiniert werden kann, sofern es nicht im Widerspruch zueinandersteht, wird das aufgenommene und geformte Schnittgut von dem Lebensmittelblock mittels des Formgreifers abtransportiert.

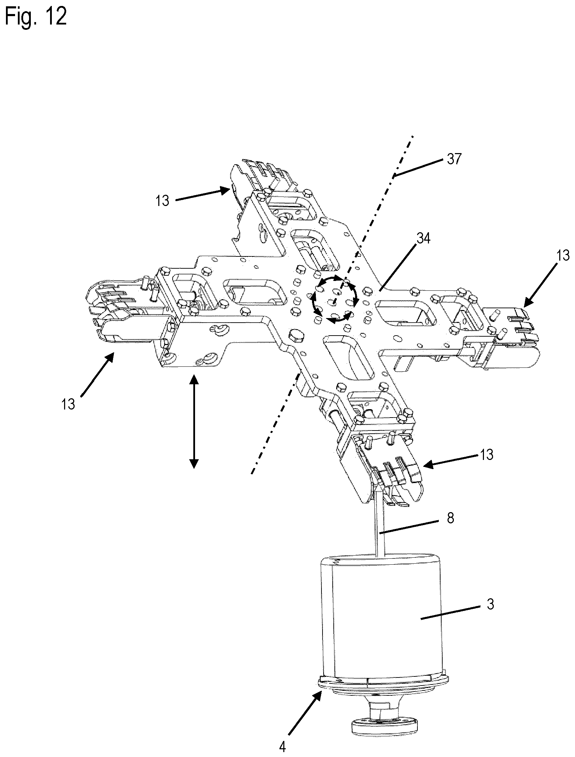

Es kann hier vorgesehen sein, dass der Formgreifer mit einer zusätzlichen Bewegungseinheit funktionell verbunden ist, wie beispielsweise mit einer Drehvorrichtung, die zuvor oder in den Figuren näher erläutert ist. Der Vorteil ist, dass auf diese Weise das geformte Schnittgut nicht unmittelbar an dem Messer aus dem Formgreifer entnommen werden muss, sondern dies an einem anderen Ort erfolgen kann. Es kann insbesondere vorgesehen sein, unmittelbar nach dem Wegbewegen des mit Schnittgut beladenen Formgreifers die nun freie Position vor dem Messer durch einen unbeladenen Formgreifer zu besetzen. Dies ist beispielsweise mittels einer Drehvorrichtung mit mehreren Formgreiferplätzen, wie sie im Zusammenhang mit der Figur 12 vorgestellt wird, möglich.

In einer Ausführungsform des Verfahrens, die mit jeder anderen zuvor genannten oder noch zu nennenden Ausführungsform kombiniert werden kann, sofern es nicht im Widerspruch zueinandersteht, umfasst die Schneide- und Form-Anlage eine Trennvorrichtung zum Führen von abgeschnittenem Schnittgut von dem Messer in den Formgreifer. Zum Aufnehmen des Schnittguts in den Formgreifer wird das Messer zurückgezogen, so dass der Abtrennvorgang unterbrochen wird, und gleichzeitig wird die Trennvorrichtung in Richtung Formgreifer bewegt, so dass das von dem Messer abgeschnittene Schnittgut von der Trennvorrichtung beaufschlagt in den Formgreifer hineingeführt wird.

Die Beschreibungen zu der Trennvorrichtung im Zusammenhang mit der Schneide- und Formanlage oder auch der Figuren können hier unmittelbar angewendet werden, insbesondere die Ausführungen bezüglich der Gestaltung der Trennvorrichtung.

In einer Ausführungsform des Verfahrens, die mit jeder anderen zuvor genannten oder noch zu nennenden Ausführungsform kombiniert werden kann, sofern es nicht im Widerspruch zueinandersteht, umfasst die Schneide- und Form-Anlage eine Überwachungsvorrichtung mit einem Detektionsrad und einer Sensorik. Die Drehung des aufgesetzten Lebensmittel-Blocks wird überwacht, indem das Detektionsrad in Richtung Lebensmittel-Block bewegt wird, bis es den Lebensmittel-Block beaufschlägt. Die resultierende Drehung des Detektionsrads wird mittels der Sensorik detektiert.

In dieser Ausführungsform erfolgt die Kontrolle der Drehung des Lebensmittel-Blocks indirekt über eine durch die Drehung ausgelöste Rotation eines Detektionsrads, welches wiederum sensorisch überprüft werden kann. Es kann, wie zuvor beschrieben, alternativ möglich sein, den Lebensmittel-Block beziehungsweise seine Drehung unmittelbar mittels Sensoren zu überprüfen.

In einer Ausführungsform des Verfahrens, die mit jeder anderen zuvor genannten oder noch zu nennenden Ausführungsform kombiniert werden kann, sofern es nicht im Widerspruch zueinandersteht, ist der Lebensmittel-Block ein Tête de Moine-Käseblock, und mit der Schneide- und Form-Anlage werden Tête de Moine Rosetten abgeschabt und geformt.

In einer Ausführungsform des Verfahrens, die mit jeder anderen zuvor genannten oder noch zu nennenden Ausführungsform kombiniert werden kann, sofern es nicht im Widerspruch zueinandersteht, ist der verwendete Lebensmittel-Block ein Tête de Moine-Käseblock und die Schneide- und Form-Anlage ist ausgebildet, Tête de Moine Rosetten abzuschneiden und zu formen.

In dieser Ausführungsform des Verfahrens ist die Schneide- und Formanlage derart ausgebildet, wie zuvor und im Folgenden beschrieben, dass Rosetten des Tête de Moine-Käseblocks abgeschabt werden, welche den Vorgaben des Pflichtenhefts der Sortenorganisation Tête de Moine, Fromage de Bellelay; abrufbar unter www.tetedemoine.ch, entsprechen.

### KURZE BESCHREIBUNG DER FIGUREN

Ausführungsformen der Erfindung werden nachstehend anhand von Figuren (Fig.) näher erläutert. Diese sind zu illustrativen Zwecken ausgewählt und deren Beschreibung ist nicht einschränkend zu verstehen. Dabei zeigt:
- Fig. 1: eine schematische, räumliche Übersichtsdarstellung einer Schneid- und Formanlage in einer einfachen Ausführungsform;
- Fig. 2: eine schematische, räumliche Übersichtsdarstellung einer Schneid- und Formanlage gemäss Figur 1 mit einem aufgesetzten Lebensmittelblock;
- Fig. 3: eine schematische, räumliche Ansicht einer Aufnahme einer Schneid- und Formanlage mit aufgesetztem Lebensmittelblock und Formgreifer;
- Fig. 4: eine schematische, räumliche Ansicht der Aufnahme aus Figur 3 mit Messer;
- Fig. 5: eine schematische, räumliche Ansicht der Aufnahme aus Figur 3 mit Formgreifer und Messer;
- Fig. 6: eine schematische, räumliche Ansicht schräg von vorn eines beispielhaften Formgreifers mit zwei Greiferbacken;
- Fig. 7: eine schematische, räumliche Darstellung der zwei Greiferbacken aus Figur 6 mit einem Abwerfer in einer Ansicht schräg von vorn;
- Fig. 8: eine schematische, räumliche Seitenansicht auf das Ensemble aus Greiferbacken und Abwerfer gemäss Figur 7;
- Fig. 9: eine schematische, räumliche Darstellung eines Formgreifers mit zwei Greiferbacken und Bewegungsmechanismus sowie einem Abwerfer mit Führungsstange für die Bewegung zwischen den Greiferbacken, in einer Ansicht von vorne und leicht von oben;
- Fig. 10: eine schematische, räumliche Ansicht auf einen Formgreifer in einer weiteren Ausführungsform schräg von der Seite;
- Fig. 11: eine schematische, räumliche Ansicht eines Formgreifers mit ausgestossenem Abwerfer und gerade herausgeworfenem Schnittgut;
- Fig. 12: eine schematische, räumliche Ansicht einer Drehvorrichtung für die Befestigung von vier Formgreifern, wobei einer der Formgreifer in Relation auf einen Zentrierdorn einer Aufnahme mit aufgesetztem Lebensmittelblock positioniert ist;
- Fig. 13: eine schematische, räumliche Ansicht eines Messers mit einer beispielhaften Trennvorrichtung;
- Fig. 14: eine schematische, räumliche Ansicht eines Messers mit einer alternativen Trennvorrichtung;
- Fig. 15: eine stark schematisierte Schnittzeichnung einer Aufnahme mit alternativ geformten Aufnahmeflächen sowie verschiedenen möglichen Positionen des Messers;
- Fig. 16: eine stark schematisierte Schnittzeichnung einer Aufnahme mit alternativen Halteelementen;
- Fig. 17: eine stark schematisierte Schnittzeichnung einer Aufnahme mit einer Übewachungsvorrichtung
- Fig. 18: einen schematischen Ausschnitt einer Schneide- und Formanlage mit einer alternativen Überwachungsvorrichtung in einer räumlichen Ansicht;
- Fig. 19: eine schematische Seitenansicht auf eine Schneide- und Formanlage gemäss Figur 18 zusätzlich mit einem Drehrad für vier Formgreifer;
- Fig. 20: eine stark schematisierte Übersichtdarstellung über die Funktionsweise einer Überwachungsvorrichtung gemäss Fig. 18;
- Fig. 21: eine stark schematisierte Übersichtsdarstellung über die Funktionsweise einer weiteren, alternativen Überwachungsvorrichtung;
- Fig. 22: eine schematische Übersicht möglicher Verfahrensschritte bei der Herstellung von geformten Schnittgut mittels einer Schneide- und Form-Anlage; und
- Fig. 23: eine stark schematisierte Ansicht von Verfahrensschritten beim Greifen und Formen von Schnittgut.

### DETAILLIERTE BESCHREIBUNG DER FIGUREN

Die vorliegende Erfindung bezieht sich auf eine Schneide- und Form-Anlage, mit welcher Schnittgut von einem Lebensmittelblock automatisiert abgetrennt und geformt werden kann. Wenn auch die Schneide- und Form-Anlage auch für andere Lebensmittelsorten geeignet ist, wird zur besseren Veranschaulichung auf die beispielhafte Ausbildung der Schneide- und Formanlage für die Herstellung von Tête de Moine Rosetten herangezogen.

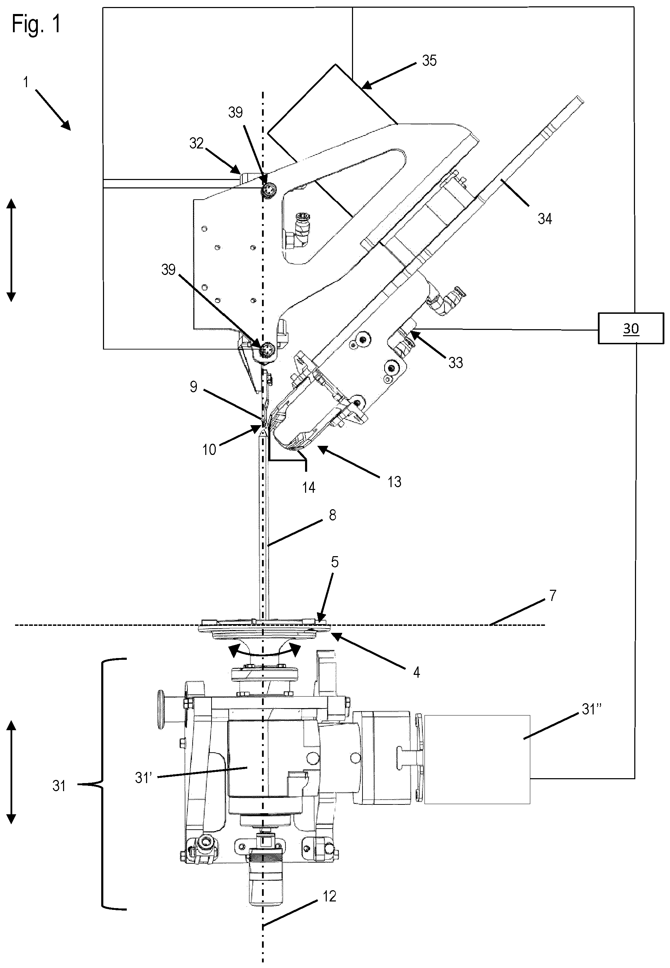

Figur 1 zeigt eine Schneide- und Form-Anlage 1 in einer einfachen Ausführungsform, welche eine Aufnahme 4, ein Messer 9 sowie einen Formgreifer 13 umfasst. Zum automatisierten Herstellen von geformten Schnittgut ist in dieser Ausführungsform die Aufnahme 4 um eine erste Rotationsachse 12 drehbar. Die Rotationsbewegung wird mittels eines Aufnahme-Antriebs 31 ermöglicht. In Figur 1 ist ein Aufnahme-Antrieb mit einem Getriebe 31' und einem Motor 31" gezeigt. Die erste Rotationsachse 12, um welche die Aufnahme 4 dreht, ist strichpunktiert eingezeichnet.

Die Aufnahme 4 umfasst hier eine flächige Auflagefläche 5 sowie einen Zentrierdorn 8. Die Auflagefläche 5 ist in dieser Ausführungsform senkrecht zu der ersten Rotationsachse 12 angeordnet und erstreckt sich in einer ersten Ebene 7. Wenn die Aufnahme 4 um die erste Rotationsachse 12 rotiert, bewegt sich die Auflagefläche in dieser ersten Ebene 7.

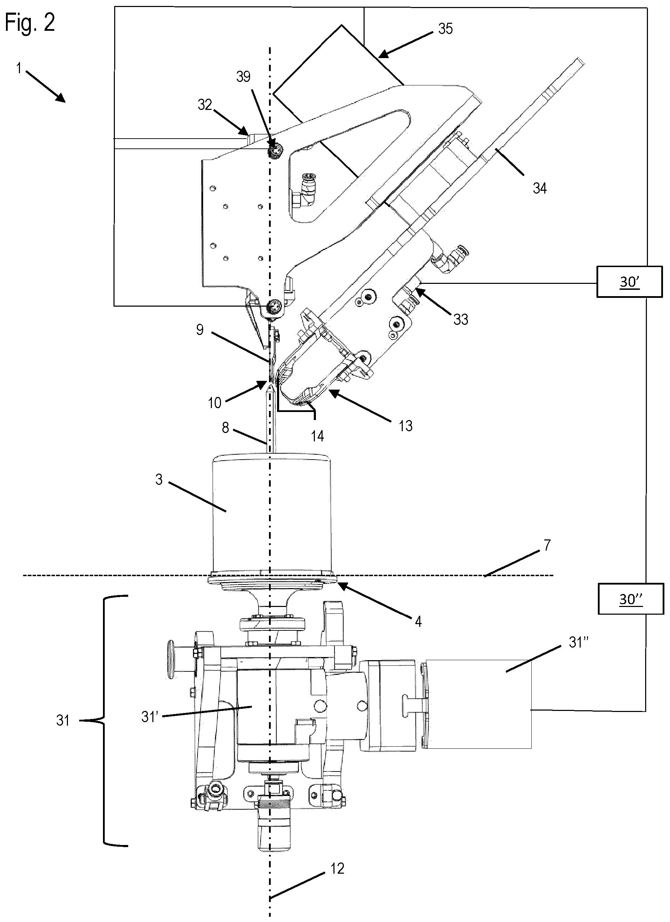

Der Zentrierdorn 8 erstreckt sich entlang der ersten Rotationsachse 12, so dass bei einer Rotation der Aufnahme 4 auch der Zentrierdorn 8 entsprechend um die erste Rotationsachse 12 gedreht wird. Auf den Zentrierdorn 8 kann ein Lebensmittelblock 3, zum Beispiel ein Tête de Moine Käseblock aufgesteckt werden (vergleiche Figur 2).

Figur 1 ist das Messer 9 von der Seite gezeigt. Die Schneidekante 10 ist nach unten in Richtung Auflagefläche 5 orientiert. Dabei ist es vorteilhaft, wenn die Schneidekante nicht durch die erste Rotationsachse 12 verläuft und auch nicht während einer Bewegung in Richtung der Aufnahme 4 den Zentrierdorn 8 kontaktiert. So kann verhindert werden, dass im Betrieb der bezeigten Schneide- und Form-Anlage 1, also wenn ein Lebensmittelblock 3 auf der Aufnahme 4 positioniert ist, die Aufnahme 4 dreht, und zum Abtrennen von Schnittgut 2 bei laufender Drehung das Messer 9 in Richtung Aufnahme 4 geschoben wird, durch den Kontakt des Messers 9 mit dem Zentrierdorn 8 die Anlage blockiert. Zum Abschneiden von Schnittgut 2 von einem auf die Aufnahme aufgestecktem Lebensmittelblock 3 erstreckt sich daher die Schneidekante 10 des Messers seitlich von dem Zentrierdorn 8 weg, beispielsweise, wie in Figur 1 gezeigt, parallel zu der ersten Ebene.

Die Bewegung des Messers 9 entlang der ersten Rotationsachse 12 kann automatisiert mittels eines Messer-Antriebs 32 ausgeführt werden.

Der Formgreifer 13 umfasst zwei gegeneinander bewegbare Greiferbacken 14, die mit ihren Innenseiten 15 eine Aufnahme 16 für Schnittgut 2 bilden. Der Formgreifer ist mit seiner Aufnahme 16 in Relation zum Messer 9, insbesondere zu dessen Schneidekante 10, ausgerichtet. Die Ausrichtung ist derart, dass Schnittgut 2, welches an der Schneidekante 10 von dem Lebensmittelblock 3 abgetrennt wird, von der Schneidekante 10 so in die Aufnahme 16 geführt werden kann, dass durch ein aufeinander zu bewegen der Greiferbacken 14 das Schnittgut 2 in der Aufnahme 16 in die gewünschte Form gebracht wird.

Der Formgreifer 13 ist analog zu dem Messer entlang der ersten Rotationsachse 12 bewegbar - er ist also axial geführt. So kann der Formgreifer 13, wenn das Messer zum Einstechen während des Drehens eines aufgesetzten Lebensmittelblocks 3 in Richtung der Aufnahme 4 bewegt wird, mit dem Messer 9 axial mitbewegt werden. So kann bei fortlaufendem Abtrennen von Schnittgut 2 und dem damit verbundenen Verkleinern des Lebensmittelblocks 3 kontinuierlich Schnittgut 2 in den Formgreifer 13 aufgenommen und geformt werden. Die Bewegung des Formgreifers 13 entlang der ersten Rotationsachse 12 kann automatisiert mittels eines Formgreifer-Antriebs 33 ausgeführt werden. Die axiale Führung des Formgreifers 13 und des Messers 9 ist hier aus Gründen der besseren Übersicht nicht gezeigt.

Es kann alternativ vorgesehen sein, dass zum Einstechen des Messers 9 in einen aufgesetzten Lebensmittelblock 3 nicht das Messer 9 (und analog der Formgreifer 13) sondern statt dessen die Aufnahme 4 in Richtung Messer 9 bewegt wird, oder es sind Messer 9 (und Formgreifer 13) und Aufnahme 4 beidseitig aufeinander zubewegbar. Da diese Ausführungsform mit einem erhöhten technischen Aufwand verbunden ist, kann sie jedoch weniger bevorzugt sein. Die verschiedenen Möglichkeiten der Bewegbarkeit sind mittels Pfeilen angedeutet.

In der gezeigten Ausführungsform weist der Formgreifer 13 ein distales Ende auf, welches geöffnet und geschlossen werden kann. Das distale Ende liegt dabei derjenigen Seite gegenüber, an welcher der Formgreifer 13 in dieser Ausführungsform an einer Drehvorrichtung 34 zum Drehen des Formgreifers 13 befestigt ist. Mittels der Drehvorrichtung 34 und einem Drehvorrichtungsantrieb 35 kann der Formgreifer nach dem Aufnehmen eines Schnittguts 2 von dem Messer 9 weggedreht werden, zum Beispiel, um das dann geformte Schnittgut 2 in eine Abpackschale zu platzieren (nicht gezeigt). Die Drehvorrichtung 34 fungiert hier als Aufhängung für den Formgreifer 13. Der Formgreifer 13 kann - zusammen mit der Drehvorrichtung - axial entlang der ersten Rotationsachse 12 mittels des Formgreifer-Antriebs 33 bewegt werden.

Zu sehen sind zudem zwei Sensoren 29, mit welchen die Position des Messers gegenüber der Aufnahme 4 (und damit indirekt die Einstechtiefe, wenn ein Lebensmittelblock 3 auf der Aufnahme 4 positioniert ist) bestimmt wird und durch Feedback an eine Steuerung 30 gesteuert werden kann. Bei den hier gezeigten Sensoren 29 handelt es sich jeweils um einen Näherungssensor.

Die Schneide- und Formanlage 1 umfasst zudem eine Steuerung 30. Die Steuerung 30 ist funktionell mit dem Formgreifer 13, dem Messer 9 und der Aufnahme 4, insbesondere mit dem Formgreifer-Antrieb 33, dem Aufnahme-Antrieb 31 und dem Messer-Antrieb 32 verbunden, so dass die Drehung der Aufnahme 4, die Bewegung des Messers 9 zum Einstechen sowie die Positionierung des Formgreifers 13 in Relation zum Messer 9 automatisiert gesteuert werden kann. In der gezeigten Ausführungsform ist auch der Drehvorrichtungs-Antrieb 35 mit der Steuerung 30 verbunden. Die funktionellen Verbindungen der einzelnen Elemente der Schneide- und Formanlage 1 mit der Steuerung 30 sind mittels Linien vereinfacht dargestellt.

In Figur 2 ist die in Figur 1 gezeigte Schneide- und Formanlage 1 mit einem aufgesetzten Lebensmittelblock 3 gezeigt. Hier ist zu erkennen, dass ein auf die Aufnahme 4 aufgesetzter Lebensmittelblock 3 im aufgesetzten Zustand die Auflagefläche 5 nahezu vollständig beaufschlägt. Ist der Lebensmittelblock kleiner, ist es möglich, dass die Auflagefläche nur teilweise beaufschlagt wird.

Idealerweise ist der Lebensmittelblock 3 annähernd rotationssymmetrisch auf den Zentrierdorn 8 und auf der Aufnahme 4 gesteckt. Der Zentrierdorn 8 hält den Lebensmittelblock 3 dann stabil auf der Aufnahme, wenn diese gedreht wird oder stillsteht.

Abweichend zu der in Figur 1 gezeigten Ausführungsform ist die Schneide- und Formanlage 1 in zumindest zwei separate Steuerungen 30', 30" aufgeteilt, welche funktional miteinander verbunden sind. Möglich ist alternativ, dass jedes Element der Schneide- und Formanlage 1 eine eigene Steuerung (30', 30'', 30" etc.) umfasst, welche jedoch alle miteinander verbunden sind und beispielsweise von einer zentralen Steuerung 30 kontrolliert und koordiniert werden.

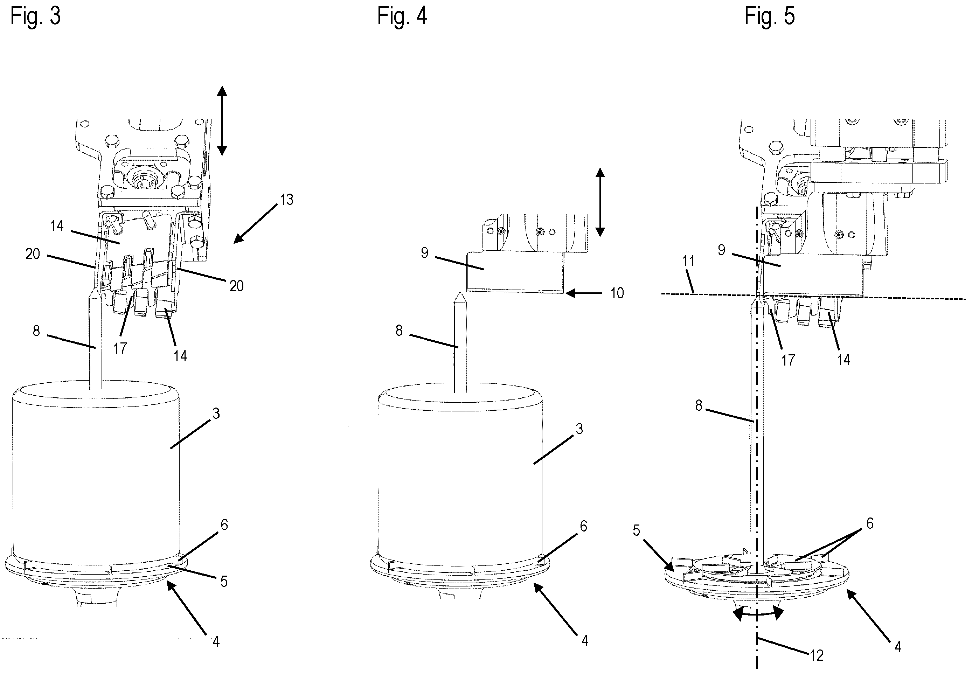

In Fig. 3 ist eine schematische Ansicht einer Aufnahme einer Schneid- und Formanlage 1 mit auf die Aufnahme 4 aufgesetztem Lebensmittelblock 3 und positioniertem Formgreifer 13 von der Seite gezeigt. Der Formgreifer 13 ist dabei seitlich neben dem Zentrierdorn 8 positioniert. Die Bewegbarkeit in diesem Fall des Formgreifers 13 ist mittels eines Doppelpfeils angedeutet; der Übersicht halber ist der Formgreifer-Antrieb 33 nicht gezeigt, ebenso wie die Drehbarkeit der Aufnahme 4.

Die Auflagefläche 5 der Aufnahme 4 umfasst verschiedene Haltemittel 6 - in diesem Fall mehrere Stege, die sich in Richtung Formgreifer 13 erstrecken. Die Stege dringen von unten in den aufgesetzten Lebensmittelblock 3, beispielsweise einen Käseblock, ein und verhindern so, dass der Lebensmittelblock 3 auf der Auflagefläche 5 verrutscht, wenn die Aufnahme 4 gedreht wird.

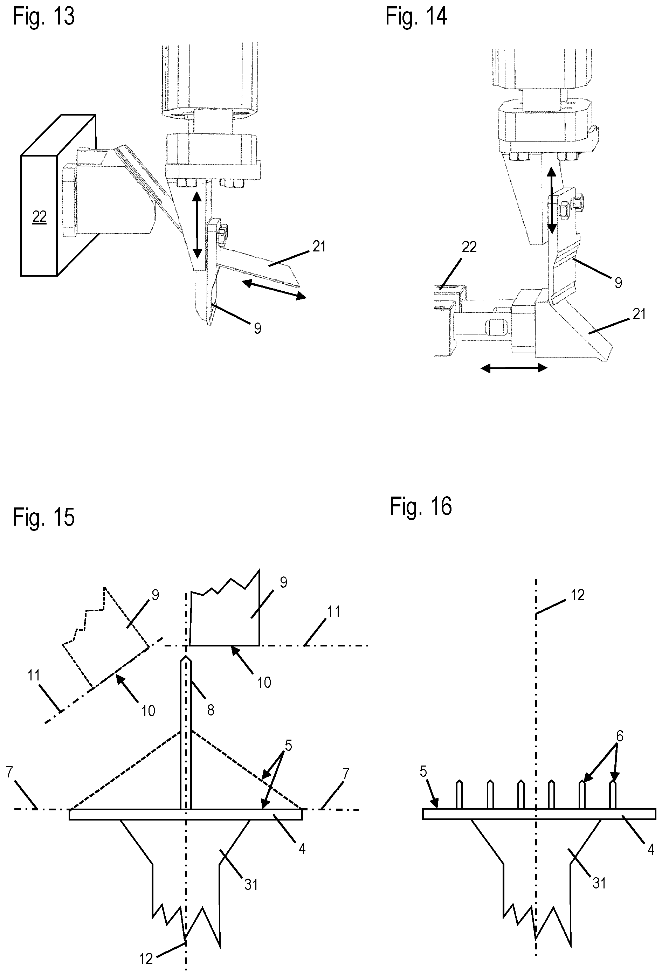

Der Formgreifer 13 ist aus zwei Greiferbacken 14 aufgebaut, die an ihrem distalen Ende (also derjenigen Seite des Formgreifers gegenüberliegend, mit welcher der Formgreifer an einer Halterung befestigt ist) fingerförmige Verlängerungen aufweisen. In die Zwischenräume der fingerförmigen Verlängerungen greifen Teile eines Abwerfers 17 ein. Die Auflagefläche 18 des Abwerfers 17 (siehe auf Fig. 14 oder 16) und die Innenseiten der Greiferbacken 14 bilden eine geformte Aufnahme 16. Seitlich ist die Aufnahme 16 durch jeweils ein Begrenzungselement 20 begrenzt. Die Begrenzungselemente 20 sind unbewegbar gegenüber den Greiferbacken 14 an der Halterung befestigt.

Schnittgut 2, das von dem Lebensmittelblock 3 geschabt, geschnitten oder gehobelt wurde, wird in die Aufnahme 16 aufgenommen, wenn der Formgreifer 13 geöffnet ist. Wird der Formgreifer 13 geschlossen, also die Geiferbacken 14 aufeinander zubewegt, wird die Aufnahme 16 verkleinert und damit das Schnittgut 2 in die gewünschte Form gebracht. Zum Ausstossen des nun geformten Schnittguts 2 zum Beispiel in eine Verpackung kann der Formgreifer 13 wieder geöffnet werden, und mittels des Abwerfers 17 aus der Aufnahme 16 ausgestossen. Da der Abwerfer 17 eine entsprechend geformte Auflagefläche 18 aufwiest, wird die Form der Schnittguts 2 nicht weiter durch den Ausstossprozess beeinträchtigt. Für den automatisierten Ablauf ist es sinnvoll, wenn der Formgreifer 13 zum Ausstossen aus der "Auffang-Position" wegbewegt wird und vorteilhafterweise in eine "Ablade-Position" gebracht wird, in welcher das Schnittgut 2 entsprechend aufgefangen wird (nicht gezeigt).

Fig. 4 zeigt eine schematische Ansicht der Aufnahme aus Figur 3, der besseren Übersicht halber ohne Formgreifer 13, dafür mit Messer 9. Hier ist ersichtlich, dass das Messer 9 so positioniert ist, dass die Schneidekante 10 nicht den Zentrierdorn 8 kontaktieren kann, wenn das Messer 9 während des Betriebs in Richtung Aufnahme 4 bewegt wird. Umfasst die Aufnahme 4 keinen Zentrierdorn 8, ist diese Position des Messers 9 zwar nicht notwendig, aber möglicherweise dennoch gewünscht, um eine gleichmässige Abnahme von Material an der Oberseite des Lebensmittelblocks 3 zu gewährleisten. In einer solchen Ausführungsform kann sich das Messer 9 aber alternativ auch über die gesamte Länge der Aufnahme 4 oder des gewünschten Lebensmittelblocks 3 erstrecken.

Fig. 5 zeigt eine schematische Ansicht der Aufnahme aus Figur 3 mit dem Formgreifer 13 und Messer 9 aus Figur 4. Hier ist die relative Positionierung von Schneidekante 10 des Messers 9 zu dem distalen Ende des Formgreifers 13 gut zu sehen. So ist der Formgreifer 13 in dieser Ausführungsform mit der Kante seines distalen Endes annähernd parallel zu der Schneidekante 10 des Messers 9 ausgerichtet. Auch sind die Länge der Schnittkante 10 und die Länge der Aufnahme 16 des Formgreifers aufeinander abgestimmt, so dass abgeschnittenes Schnittgut 2 vollständig und nahezu unmittelbar nach dem Abtrennprozess von dem Messer 9 in den Formgreifer 13 aufgenommen werden kann. In Figur 5 ist angedeutet, dass sich in dieser Ausführungsform die Schneidekante 10 des Messers 9 in einer zweiten Ebene 11 erstreckt. Wird das Messer 9 und der Formgreifer 13 zum Abtrennen von Schnittgut in Richtung Aufnahme bewegt, wird diese zweite Ebene 11 virtuell bewegt, und die Anordnung von Schneidekante 10 zur distalen Kante des Formgreifers 13 bleiben in Bezug auf die zweite Ebene 11 gleich.

Der Übersicht halber ist in Fig. 5 kein Lebensmittelblock 3 gezeigt, so dass die Ausbildung der Auflagefläche 5 zu sehen ist. Auf der Auflagefläche 5 sind eine Mehrzahl von Halteelemente angebracht, die sich jeweils in Richtung Messer 9 beziehungsweise Formgreifer 13 senkrecht zur Auflagefläche 5 erstrecken. Es sind sowohl radial angeordnete Stege als auch ein in diesem Fall um den Zentrierdorn 8 umlaufender Steg vorhanden. Bezüglich der Anzahl und Anordnung der Haltelemente 6 muss abgewogen werden, dass möglichst viel Halt vermittelt wird, ohne jedoch die Integrität des Lebensmittelblocks 3 zu sehr zu beschädigen. So kann zum Beispiel verhindert werden, dass ausgelöst durch die Halteelemente 6 der Lebensmittelblock 3 zerbricht. Die Abwägung erfolgt dabei auch im Hinblick auf die Konsistenz des Lebensmittelblocks 3 - so können zum Beispiel für einen Hartkäse-Block andere Halteelemente sinnvoll sein als für einen Salami-Block. Wie erwähnt kann zum Beispiel ein umlaufender Spannring oder seitlich an den Lebensmittelblock 3 angreifende Greifer oder Krallen als eine weniger invasive Halterung bevorzugt sein.

Die Drehbarkeit der Aufnahme ist mittels eines gekrümmten Doppelpfeils angedeutet.

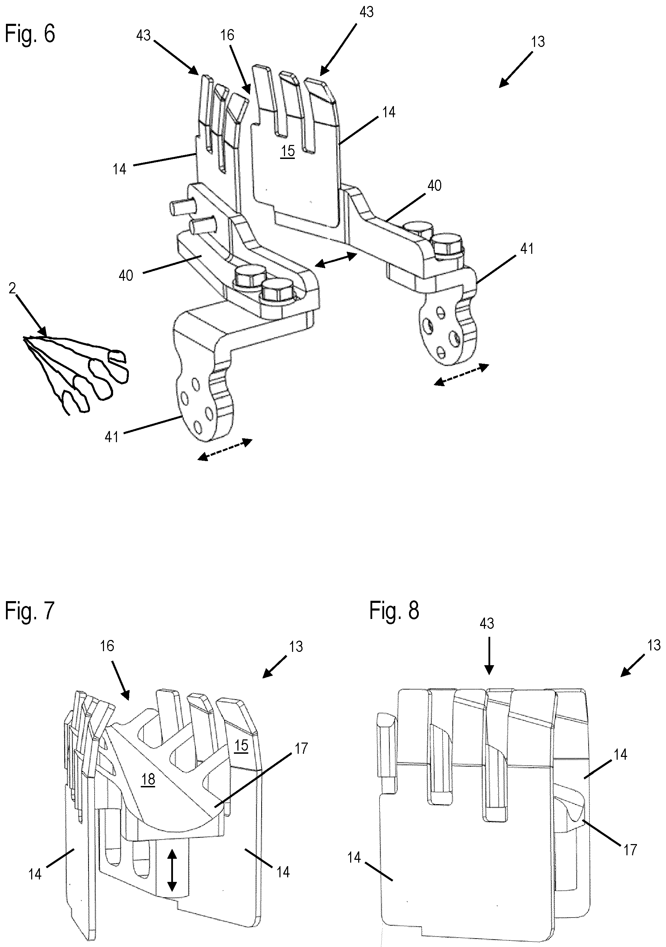

In Fig. 6 ist eine schematische Darstellung eines Formgreifers 13 mit zwei Greiferbacken 14 in einer bevorzugten Ausführungsform gezeigt. Jede Greiferbacke 14 weist ein distales Ende 43 beziehungsweise eine distale Kante auf, mit welcher der Formgreifer 13 gegenüber dem Messer 9 positioniert werden kann. Jedes distale Ende 43 beziehungsweise der entsprechende Endbereich hat in dieser Ausführungsform eine Fingerform. Insbesondere hat jede Greiferbacke fingerförmige Verlängerungen mit Aussparungen zwischen den Fingern. Wie in Figur 7 ersichtlich, können in diese Aussparungen komplementäre Verlängerungen eines Abwerfers 17 einfahren, sofern dieser vorgesehen ist. So ist eine geführte Bewegung eines Abwerfers 17 zwischen den Greiferbacken 14 möglich. Bezüglich des Abwerfers 17 können dessen Aussenkanten der Auflagefläche aber alternativ auch ohne derartige Verlängerungen ausgebildet sein.

Jede Greiferbacke 14 ist speziell geformt, wobei die Formung insbesondere durch die Innenseiten 15 der Greiferbacken 14 bestimmt ist. Gemeinsam bilden die Innenseiten 15 der Greiferbacken 14 eine Form, mit welcher Schnittgut 2, dass in den Formgreifer 13 aufgenommen wird, geformt werden kann, sobald die Greiferbacken 14 in einen geschlossenen Zustand gebracht werden. Die Greiferbacken 14 dienen in diesem Fall nicht dem reinen "Zugreifen" von Material, um es sicher von A nach B zu befördern; sie fungieren also nicht als reine Zangen. Ein zu festes Zugreifen, also beaufschlagen des aufgenommenen Materials durch die Innenseiten 15 der Greiferbacken ist tatsächlich nicht erwünscht, da es die Gefahr birgt, dass das Schnittgut derart verformt wird, dass es von der vorgesehenen Form abweicht und nicht mehr ansprechend für einen Käufer aussehen kann. Hier ist zu bedenken, dass es sich um Schnittgut eines halbfesten oder festen Lebensmittels handelt, welches je nach Sorte gegebenenfalls zerbröckelt oder zermatscht, wenn es zu fest zusammengedrückt wird.

In Figur 6 ist beispielhaft zu sehen, wie die Greiferbacken bewegbar ausgebildet sein können. So ist das proximale Ende einer Greiferbacke 14 an einem eigenen Backenhalter 40 befestigt. Hier ist es möglich, dass es sich beispielsweise um eine unlösbare Befestigung, wie zum Beispiel eine Verschweissung handelt, oder alternativ kann die Verbindung eine lösbare sein, zum Beispiel über eine Verschraubung. Eine lösbare Verbindung kann insbesondere dann von Vorteil sein, wenn vorgesehen ist, dass in einer bestehenden Schneide- und Form-Anlage die Greiferbacke(n) 14 ausgetauscht werden soll(en), zum Beispiel für verschiedene Lebensmittel, verschiedene Formen für eine Lebensmittelsorte, oder für eine Reparatur. Alternativ kann eine Greiferbacke 14 als ein einstückiges Werkstück mit dem Backenhalter 40 ausgebildet sein.

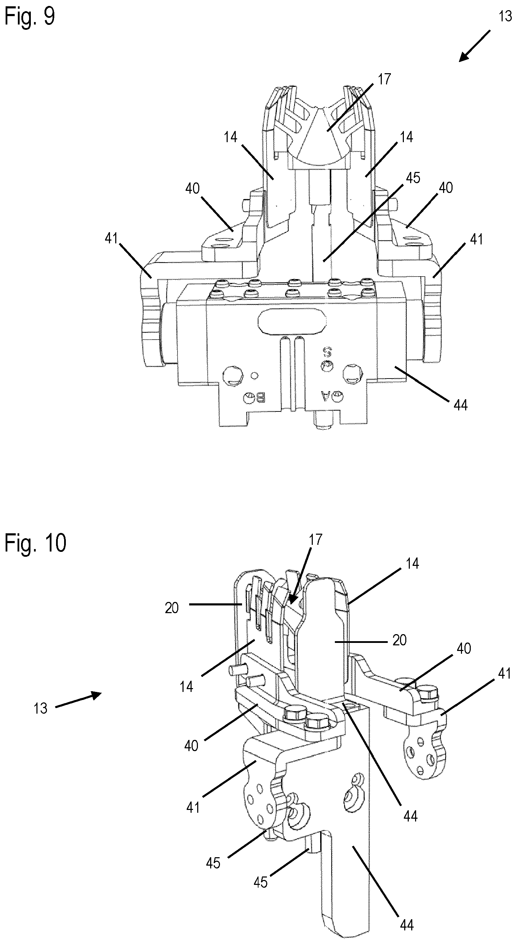

Der Backenhalter 40 wiederum ist mit einer Adapterplatte 41 verbunden. Diese Platte stellt die Verbindung zu einer Bewegungseinheit 44 für die jeweilige Greiferbacke 14 her (siehe auch Fig. 9).

In der gezeigten Ausführungsform sind die Greiferbacken 14 so ausgebildet, dass sie als Parallelgreifer fungieren. Alternativ ist eine Bewegbarkeit der Greiferbacken 14 als Winkelgreifer möglich (nicht gezeigt). Der Vorteil eines Parallelgreifer ist, dass gegebenenfalls nur eine Greiferbacke 14 bewegbar sein muss, während die andere unbewegt ist. Abweichend von der hier gezeigten Ausführungsform kann z.B. statt eine linke und eine rechte Greiferbacke 14 vorgesehen sein, dass jede Greiferbacke 14 durch zwei oder mehr Backenteile gebildet wird, die beispielsweise durch verschiedene Bewegungen in Richtung der gegenüberliegenden Greiferbacke(n) der inneren Aufnahme 16 die gewünschte Form geben (nicht gezeigt). In der gezeigten Ausführungsform ist jede Greiferbacke 14 einteilig.

Die Bewegungsrichtung jeder Greiferbacke 14 ist hier für die Adapterplatte 41 gezeigt. Für jede Greiferbacke 14 ist ein Doppelpfeil gezeigt, da in dieser Ausführungsform jede Greiferbacke 14 in die angegebenen Richtungen hin- und herbewegt werden kann. Werden die Greiferbacken 14 entsprechend voneinander wegbewegt, kann der Formgreifer 13 in einen geöffneten Zustand gebracht werden; die Greiferbacken 14 sind mit ihren distalen Enden derart voneinander beabstandet, dass Schnittgut 2, das zuvor mit dem Messer 9 vom Lebensmittelblock 3 abgetrennt wurde, in die Aufnahme 16 zwischen den Greiferbacken 14 hinein oder aus der Aufnahme 16 herausgebracht werden kann. Mittels der Steuerung ist kontrolliert, in welchen maximalen Abstand zueinander die Greiferbacken 14 bewegt werden. Werden die Greiferbacken 14 aufeinander zubewegt, wird der Formgreifer 13 in einen geschlossenen Zustand gebracht. Hier sind die Greiferbacken 14 mit einem vorgegebenen minimalen Abstand zueinander positioniert. Dieser minimale Abstand ist derart gewählt, dass bei einer Bewegung der Formgreifers 13 selbst bei geschlossenen Greiferbacken 14 das aufgenommene Schnittgut 2 nicht aus der Aufnahme 16 herausfällt. Es kann beispielsweise in der Steuerung 30 hinterlegt sein, welches die entsprechenden Weglängen für die hin- und her-Bewegungen sind, um den Formgreifer 13 in den geschlossenen beziehungsweise geöffneten Zustand zu bringen.

Gezeigt ist hier beispielhaftes Schnittgut 2, wie es beispielsweise beim Abschaben von Tête de Moine-Rosetten erzeugt wird. Details für die Herstellung von Tête de Moine Rosetten finden sich im Pflichtenheft der Sortenorganisation Tête de Moine, Fromage de Bellelay. Explizit wird auf Artikel 3 verwiesen, wonach als Vorgabe die Schabbarkeit gilt: Die Rosetten, welche mit einer Girolle oder einem ähnlichen Gerät hergestellt wurden, müssen kompakt sein. Unter Rosetten wird verstanden: Der Tête de Moine wird in der Regel nicht geschnitten, sondern mit der Girolle oder einem ähnlichen Gerät geschabt und zu Rosetten geformt, wie sie auf der Etikette nach Artikel 20 (siehe Pflichtenheft) abgebildet sind. Eine Schneide- und Form-Anlage ist besonders bevorzugt derart ausgebildet, dass Rosetten entsprechend diesen Vorgaben abgeschabt und mit dem Formgreifer 13 automatisiert geformt und im Weiteren auch abgelegt werden können.

In Fig. 7 ist eine schematische Darstellung der zwei Greiferbacken aus Fig. 6 mit einem zwischen den Greiferbacken 14 positionierten Abwerfer 17 in einer Ansicht schräg von vorn gezeigt. Der Abwerfer 17 weist eine in Richtung distalem Ende weisende Auflagefläche 18 auf. Schnittgut 2, welches von einem Lebensmittelblock wie einem Tête de Moine Käse abgetrennt und in den Formgreifer überführt wurde, kommt auf dieser Auflagefläche 18 zum Liegen. In dieser Ausführungsform weist der Abwerfer 17 fingerförmige Verlängerungen auf, welche in die Aussparungen der Greiferbacken 14 eingreifen. Wird der Abwerfer 17 in der Aufnahme 16 des Formgreifers 13 hoch- und runter bewegt (also zwischen dem distalen Ende 43 und dem proximalen Ende), ist er durch die Aussparungen in seiner Bewegung geführt. Ist Schnittgut 2 aufgenommen und die Greiferbacken 14 sind in den geschlossenen Zustand gebracht, bildet die Auflagefläche 18 zudem einen Teil der formgebenden Fläche.

Dies ist ebenfalls in Figur 8 zu sehen, in welcher das Ensemble aus Greiferbacken 14 und Abwerfer 17 gemäss in einer schematisierten Seitenansicht gezeigt ist. Insbesondere ist aus diesen beiden Figuren die Kegelform der Aufnahme 16 zu sehen, welche besonders für die Herstellung der Tête de Moine-Rosetten geeignet ist. In Figur 8 ist zudem das distale Ende 43 gut zu sehen, welches gegenüber der Schneidekante 10 des Messers 9 ausgerichtet wird. Bevorzugt erfolgt die Ausrichtung derart, dass die Kante parallel oder annähernd parallel zu der Schneidekante des Messers 9 verläuft. Dies ist insbesondere für die Herstellung der Tête de Moine-Rosetten vorteilhaft, da so die natürlicherweise entstandene Rosettenform durch die Ausrichtung des Formgreifers optimal für die Weiterverarbeitung genutzt werden kann.

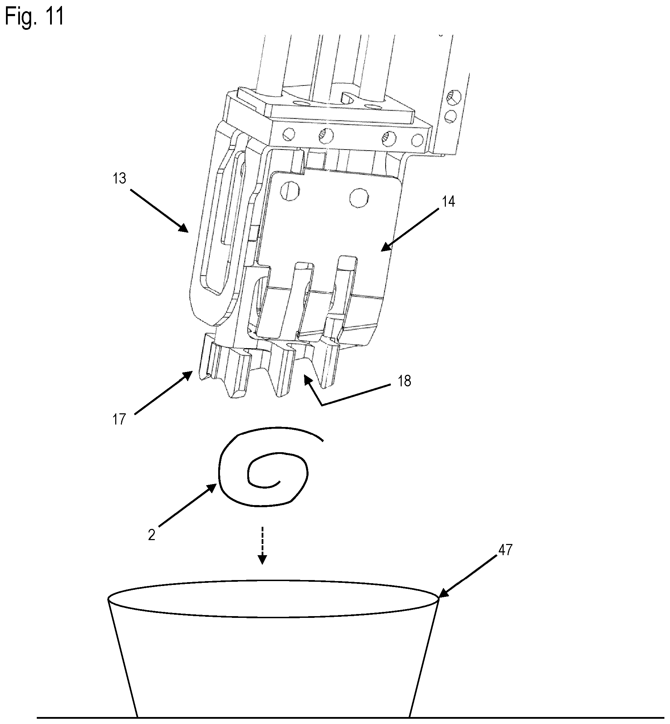

In Fig. 9 ist eine schematische Darstellung eines Formgreifers 13 mit einem Bewegungsmechanismus 44 für die Bewegung der Greiferbacken 14 zu- und voneinander weg in einer Frontansicht leicht von oben. Zudem ist der Abwerfer 17 mit einer Führungsstange 45 gezeigt, welche die Verbindung für einen Antrieb des Abwerfers herstellt (nicht gezeigt). Mittels eines solchen Antriebs kann der Abwerfer 17 zwischen den Greiferbacken 14 hoch- und runter bewegt werden. Ist der Abwerfer 17 unten, also dem distalen Ende 43 weiter entfernt positioniert, bildet er einen Teil der Aufnahme 16 für das Schnittgut 2. Ist der Abwerfer 17 oben, als an dem distalen Ende 43 des Formgreifers positioniert, kann aufgenommenes Schnittgut 2 aus der Aufnahme 16 abgegeben werden (vergleiche auch Figur 11). Dazu kann es vorgesehen sein, dass der Abwerfer 17 sogar aus der Aufnahme 16 herausbewegt wird - er ragt in diesem Fall über das distale Ende 43 des Formgreifers 13 hinaus.

In Fig. 10 ist eine schematische Ansicht auf einen Formgreifer 13 in einer weiteren Ausführungsform schräg von der Seite. In dieser Ausführungsform umfasst der Formgreifer 13 zusätzlich zwei Begrenzungselemente 20, welche die Aufnahme 16 zwischen den Greiferbacken 14 und dem Abwerfer 17 seitlich begrenzen. Die beiden Greiferbacken 14 und die Begrenzungselemente 20 bilden sozusagen Seitenwände der Aufnahme 16, während die Auflagefläche 18 des Abwerfers 17 den Boden stellt. Am distalen Ende 43 ist der Formgreifer 13 schliesslich geöffnet, wobei die Öffnung im geöffneten Zustand grösser ist als im geschlossenen Zustand. Im geschlossenen Zustand kann das distale Ende 43 lediglich durch die Greiferbacken 43 derart eng sein, dass eingelegtes Schnittgut 2 bei einer Greiferbewegung nicht hinausfällt.

In Figur 10 sind zusätzliche Befestigungsplatten 44 gezeigt, mit welchen der Formgreifer 12 an einer Halterung, beispielsweise einer Drehvorrichtung 34 befestigt ist (siehe auch Fig. 12). Der Übersicht halber ist hier der Bewegungsmechanismus 44 für die Greiferbacken 14 nicht gezeigt.

Es können eine oder mehrere Befestigungsplatten 44 vorgesehen sein. In der hier gezeigten Ausführungsform sind zwei Befestigungsplatten 44 gezeigt - eine, welche sich in Richtung distal zu proximal erstreckt; diese ist zu vorderst zu sehen. Eine weitere, zweite Befestigungsplatte 44 erstreckt sich senkrecht zu dieser vorderen Befestigungsplatte 44 und ist mit dieser verbunden - die Verbindungselemente selbst (z.B. Schrauben) sind nicht gezeigt. An diese zweite Befestigungsplatte 44 sind zudem die beiden Begrenzungselemente 20 befestigt.

In den Figuren 6 bis 10 sind zum Teil der Übersicht halber einzelne Verbindungselemente mal gezeigt oder nicht gezeigt. Es liegt im Wissen eines Fachmannes, die richtige Art der jeweiligen Verbindung zu wählen und umzusetzen.

In Fig. 11 ist eine schematische Ansicht eines Formgreifers 13 mit ausgestossenem Abwerfer 17 und gerade herausgeworfenem Schnittgut 2 gezeigt. Der Formgreifer 13 ist hier nach unten in Richtung eines Behälters, beispielsweise einer Verkaufsschale, ausgerichtet, so dass durch das Ausstossen des Abwerfers 17 das geformte Schnittgut 2 durch die Schwerkraft in den bereitgestellten Behälter 47 fällt. Sobald sich das Schnittgut 2 in dem Behälter 47 befindet, können weitere Verarbeitungsschritte erfolgen, zum Beispiel Wiegen des Schnittguts 2 und/oder Verpacken.

Gut zu sehen ist, dass der Abwerfer 17 derart weit aus dem Formgreifer 13 bewegt ist, dass seine Auflagefläche 18 sich nicht mehr in der Aufnahme 16 des Formgreifers 13 befindet. In dieser Ansicht befördert der Abwerfer 17 das Schnittgut also vollständig aus dem Formgreifer 13 heraus. Sind die Greiferbacken genügend weit geöffnet und der Formgreifer 13 entsprechend ausgerichtet, kann es jedoch auch genügen, dass der Abwerfer 17 das Schnittgut 2 innerhalb der Aufnahme 16 in Richtung distales Ende befördert, ohne aus dem Formgreifer 13 herauszuragen.

In Fig. 12 ist eine schematische Ansicht von vier Formgreifern 13 gezeigt, welche beispielsweise an einer Drehvorrichtung 34 befestigt sind. Der besseren Anschaulichkeit halber ist dabei einer der Formgreifer 13 in einer relativen Position zu einer Aufnahme 4 mit Zentrierdorn 8 und einem aufgesetztem Lebensmittelblock 3, wie sie in einer Schneide- und Form-Anlage 1 realisiert sein kann, gezeigt.

Die Drehvorrichtung 34 ist als ein Greiferrad ausgebildet. Das heisst, sie ist um eine zweite Rotationsachse 37 drehbar. Es kann vorgesehen sein, dass eine Drehung um die zweite Rotationsachse 37 in eine Richtung vorgesehen ist - in dieser Ausführungsform ist das Greiferrad in beide Richtungen um die zweite Rotationsachse 37 drehbar. Mittels dieser Drehbewegung kann, wenn mit dem Messer 9 Schnittgut von dem Lebensmittelblock abgetrennt wurde und dieses in den Formgreifer 13 aufgenommen wurde, unmittelbar danach der nun beladene Formgreifer 13 weggedreht und dadurch automatisch ein unbeladener Formgreifer 13 in eine Aufnahmeposition nahe dem Messer 9 und dem Lebensmittelblock 3 gebracht werden. Das Messer 9 kann in der Zeit bereits in den Lebensmittelblock 3 eingefahren sein und das nächste Schnittgut 2 abtrennen.

Es ist besonders vorteilhaft, wenn der beladene Formgreifer 13 das dann geformte Schnittgut 2 in einen entsprechend positionierten Auffanggehälter, zum Beispiel eine Schale, abgeben kann. Auf diese Weise kann die automatisierte Herstellung von Schnittgut 2 und die nachgeschaltete Formung (und Abgabe) des Schnittguts 2 beschleunigt werden. Diese Beschleunigung kann bereits durch die Verwendung von zwei oder mehr Formgreifern 13 an einer Halte- bzw. Drehvorrichtung 34 erzielt werden; eine Ausführungsform mit vier Formgreifern 13 an einer Drehvorrichtung 34 hat sich als besonders vorteilhaft für die Herstellung von Tête de Moine Rosetten erwiesen.

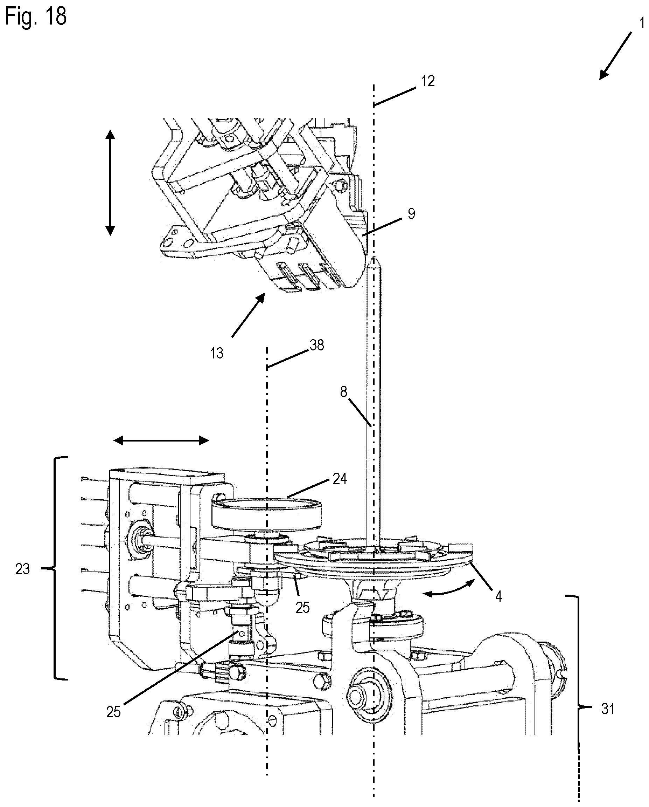

Die automatisierte Drehung der Drehvorrichtung 34 wird mittels eines Drehvorrichtungs-Antrieb 35 realisiert, der von der Steuerung 30 kontrolliert ist. Aus Übersichtsgründen ist der Drehvorrichtungs-Antrieb 35 hier nicht gezeigt, er ist jedoch beispielsweise in Fig. 1 oder Fig. 18 zu sehen. Bei dem Drehvorrichtungs-Antrieb 35 kann es sich beispielsweise um ein Servomotor-gesteuerten Antrieb, einen Drehstrommotor (beispielsweise mit 230V oder 400V), oder ein pneumatisches Drehmodul handeln.

Zum Positionieren eines Formgreifers 13 der Drehvorrichtung 34 ist die Drehvorrichtung zusätzlich entlang der ersten Rotationsachse 12 bewegbar, wie zuvor besprochen. Dazu ist die Drehvorrichtung axial bewegbar geführt in die Schneide- und Formanlage 1 integriert.

In Fig. 13 ist eine schematische Ansicht eines Messers mit einer beispielhaften Trennvorrichtung 21 gezeigt. Hier handelt es sich um einen stark vereinfachten Ausschnitt. In der gezeigten Ausführungsform handelt es sich um ein Winkelblech. Das Winkelblech ist hier lediglich aus Gründen der besseren Anschaulichkeit derart dargestellt, als würde es das Messer 9 durchdringen. Tatsächlich dürfen sich das Messer 9 und die Trennvorrichtung 21 im Betrieb der Schneide- und Form-Anlage 1 nicht kontaktieren; die gewählte Darstellung soll verdeutlichen, dass die Trennvorrichtung 21 den Weg des Messers 9 kreuzt. Als der Weg des Messers 9 wird hier die Strecke verstanden, auf welcher das Messer 9 hoch- und runterbewegt wird.

Wie zuvor erläutert wird das Messer 9 nach unten, also in Richtung Aufnahme 4 so weit bewegt, bis es um eine vordefinierte Tiefe in einen aufgesetzten Lebensmittelblock 3 einsticht. Wird der Lebensmittelblock 3 gedreht, erfolgt das Abtrennen des Schnittguts 2. Ist eine gewünschte Menge an Schnittgut 2 abgetrennt, wird das Messer 9 zurückgezogen, also nach oben bewegt. Mittels der Trennvorrichtung 21 wird der Transport des Schnittguts von dem Lebensmittelblock 3 in den Formgreifer 13 unterstützt, indem nun die Trennvorrichtung 21, in diesem Fall das Winkelblech, in Richtung Formgreifer 13, in Figur 13 von links nach rechts bewegt wird. Dabei kontaktiert das Winkelblech das Messer 9 nicht, da das Messer weit genug nach oben bewegt wurde.

Die Bewegung der Trennvorrichtung 21 erfolgt mittels einer eigenen Bewegungsvorrichtung 22. Diese ist über die Steuerung 30 kontrolliert. Auf diese Weise wird die Bewegung der Trennvorrichtung 21 mit der Bewegung des Messers 9 und vorteilhafterweise auch mit der Rotationsbewegung des Formgreifers 13 abgeglichen.

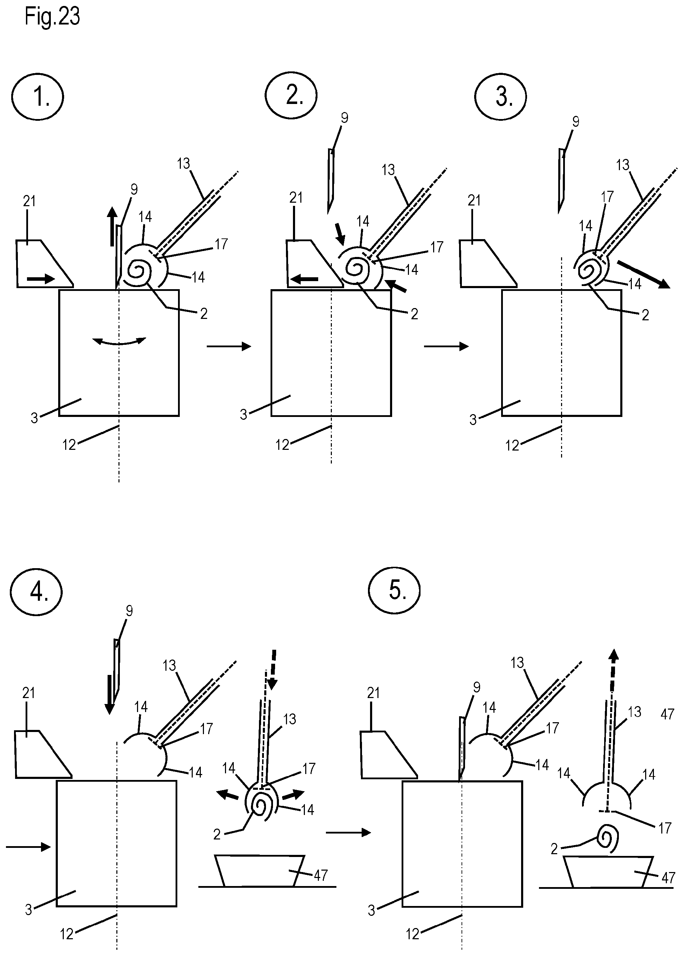

In Fig. 14 ist eine schematische Ansicht eines Messers 9 mit einer alternativen Trennvorrichtung 21 gezeigt. In diesem Fall ist die Trennvorrichtung 21 keilförmig ausgebildet, wobei die Keilspitze in Richtung Messer 9 bzw. Formgreifer 13 (nicht gezeigt) ausgerichtet ist. Mittels einer eigenen Bewegungsvorrichtung 22 kann die keilförmige Trennvorrichtung 21 entlang der gezeigten Pfeilrichtung hin- und zurückbewegt werden. Dabei gilt auch hier, dass sich das Messer 9 und die Trennvorrichtung 21 im Betrieb nicht kontaktieren - eine genauere Beschreibung eines beispielhaften Bewegungsablaufs ist Fig. 23 zu entnehmen.

Mittels der Keilform kann abgetrenntes Schnittgut 2 unkompliziert in einen entsprechend positionierten Formgreifer 13 bewegt werden.

In Fig. 15 ist eine stark schematisierte Schnittzeichnung einer Aufnahme 4 mit einem Zentrierdorn 8, wobei die zwei mögliche, alternativ geformte Aufnahmeflächen 5 sowie verschiedenen möglichen Positionen des Messers 9 gezeigt sind. In einer gezeigten Alternative ist die Aufnahmefläche 5 flächig und erstreckt sich in einer ersten Ebene 7. Diese erste Ebene 7 wiederum wird von der ersten Rotationsachse 12 senkrecht durchstochen. Das Messer 9 kann beispielsweise derart gegenüber der Aufnahme 4 positioniert sein, dass sich seine Schneidekante 10 parallel zu der ersten Ebene 7 erstreckt (siehe rechts gezeigtes Messer 9). Alternativ kann das Messer 9 in einer abweichenden Ausrichtung positioniert sein (siehe links gezeigtes Messer 9). Der Antrieb 31 für die Rotation der Aufnahme 4 ist hier angedeutet.

Ist eine Aufnahme 4 mit Zentrierdorn 8 vorgesehen, darf im Betrieb der Schneide- und Formanlage 1 das Messer 9 nicht den Zentrierdorn 8 oder andere Halteelemente 6 kontaktieren. Dies kann zum Beispiel durch eine entsprechende Positionierung oder durch eine entsprechende Kontrolle der Bewegung mittels der Steuerung 30 erfolgen.

Eine alternative Auflagefläche 5 ist mit einer gestrichelten Linie gezeigt. Diese Auflagefläche ist kegelförmig, wobei hier die Kegelspitze in der ersten Rotationsachse 12 liegt. Eine solche Kegelform kann zum Beispiel dann sinnvoll sein, wenn bereits der Lebensmittelblock 3 eine komplementär geformte Unterseite aufweist. Die Form und Grösse der Auflagefläche 5 kann also an die Form und Grösse des zu bearbeitenden Lebensmittelblocks 3 angepasst sein.

In Fig. 16 ist eine stark schematisierte Schnittzeichnung einer Aufnahme 4 mit alternativen Halteelementen 6 gezeigt. In dieser Ausführungsform weist die Aufnahme 4 eine Mehrzahl von Dornen auf, die sich von der Auflagefläche 5 parallel zu der Rotationsachse 12 erstrecken. Weist die Auflagefläche 5 eine abweichende Form auf, ist vorgesehen, dass die Halteelemente 6 derart ausgebildet und orientiert sind, dass sie sowohl einen guten Halt für einen aufzusetzenden Lebensmittelblock 3 sowie eine gute Handhabung im Zusammenhang mit dem Aufsetzen des Lebensmittelblocks 3 erlauben.

In dieser Figur wurde auf die Darstellung z.B. des Messers 9 der besseren Übersicht halber verzichtet. Angedeutet ist hier lediglich der Antrieb 31 für die Rotation der Aufnahme 4.

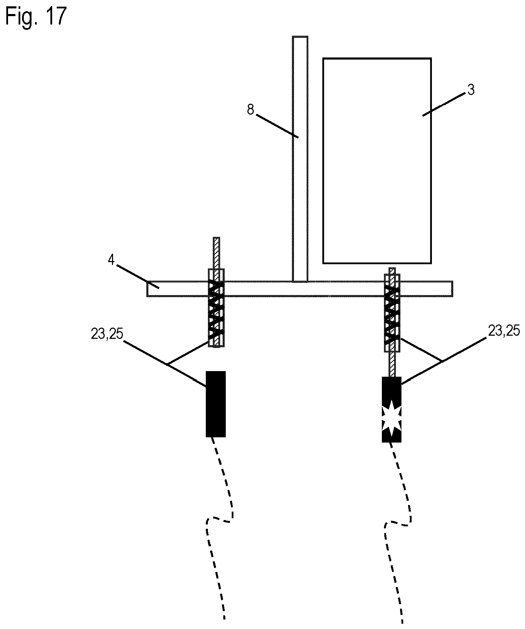

In Fig. 17 ist eine stark schematisierte Übersicht über eine Überwachungsvorrichtung 23 gezeigt, mit welcher kontrolliert werden kann, ob ein Lebensmittelblock 3 auf der Aufnahme 4 positioniert ist oder nicht. Die hier gezeigte Überwachungsvorrichtung 23 ist als ein Bolzen mit einer Federrückstellung ausgebildet. Der Bolzen ist derart an der Aufnahme befestigt, dass er durch das Aufsetzen eines Lebensmittelblocks 3 nach hinten in das Gehäuse geschoben wird, und dadurch von einer Sensorik 25 erkannt wird. Ist die Aufnahme 4 nicht von einem Lebensmittelblock 3 besetzt, ragt der Bolzen nach oben und kann nicht von der Sensorik 25 erkannt werden. Die Sensorik 25 ist wiederum steuerungstechnisch mit einer Steuerung 30 verbunden (nicht gezeigt), welche dann die Aktionen der übrigen Elemente der Schneide- und Formanlage 1 kontrolliert.

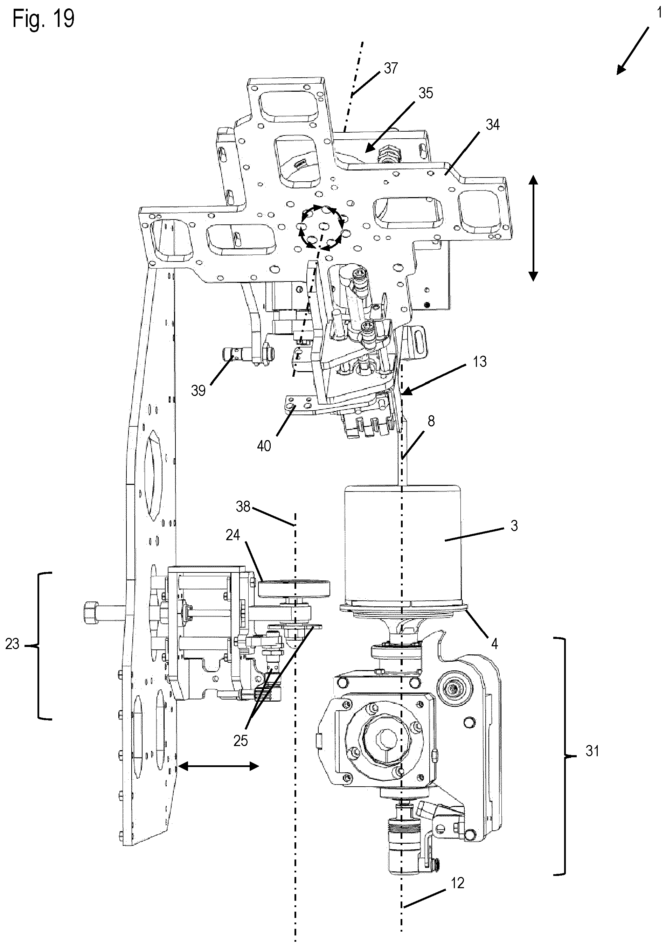

In Fig. 18 ist ein schematischer Ausschnitt einer Schneide- und Formanlage mit einer zusätzlichen Überwachungsvorrichtung 23 gezeigt (für eine Gesamtübersicht vergleiche Fig. 19). Der Formgreifer 13 ebenso wie das Messer 9 sind hier der besseren Übersicht halber angedeutet und nicht vollständig verbaut gezeigt. Die Aufnahme 4 umfasst einen Zentrierdorn 8 und ist mittels eines Rotationsantriebs 31 um die erste Rotationsachse 12 drehbar.

Die Überwachungsvorrichtung 23 dient der Kontrolle, ob sich ein aufgesetzter Lebensmittelblock 3 ordnungsgemäss mit der Aufnahme 4 dreht. In dieser Ausführungsform umfasst die Überwachungsvorrichtung 23 ein Detektionsrad 24, welches senkrecht zu der ersten Rotationsachse 12 bewegbar ist. Zur Überwachung der Rotation des Lebensmittelblocks 3 wird das Detektionsrad 24 so weit in Richtung erste Rotationsachse 12 bewegt, dass es leicht auf dem Lebensmittelblock 3 aufgesetzt. Dadurch dreht sich das Detektionsrad 24 ebenfalls, entsprechend gegenläufig. In Fig. 18 ist die entsprechende Rotationsachse 38 des Detektionsrads 24 eingezeichnet. Es kann vorgesehen sein, den Druck, mit welchem das Detektionsrad 24 auf dem Lebensmittelblock 3 zum Liegen kommt, zum Beispiel mittels der Steuerung 30 zu kontrollieren.

Mittels einer Sensorik 25 wird dann die Rotation des Detektionsrads 24 kontrolliert, um Rückschlüsse über die Rotation des Lebensmittelblocks 3 zu ziehen. Der Begriff Sensorik 25 bezieht sich hier nicht nur auf einen Signal-Detektor, sondern auf eine Einheit bzw. Kombination aus einem Signal-Detektor und einem Signal-Auslöser. Der Signal-Auslöser umfasst oder verursacht ein vom Signal-Detektor detektierbares Signal. Die Sensorik 25 oder Teile davon sind zudem funktionell mit der Steuerung 30 verbunden. Die Steuerung 30 ist ausgebildet, ein von der Sensorik weitergeleitetes Signal zu empfangen und zu verarbeiten, indem sie zum Beispiel einen Alarm auslöst, wenn trotz drehender Aufnahme 4 und aufgesetztem Lebensmittelblock 3 das Detektionsrad 24 nicht (korrekt) dreht.

In der in Fig. 18 gezeigten Ausführungsform erfolgt die Kontrolle mittels einer Kombination aus induktiven Näherungssensor 25 und einer Halbscheibe 25 aus Metall, beispielsweise aus einem Edelstahl. Die Halbscheibe fungiert hier als ein Signal-Auslöser, der induktive Näherungssensor als Signal-Detektor. Die Halbscheibe und das Detektionsrad 24 sind auf der gleichen Achse gelagert, so dass sich die Halbscheibe mit dem Detektionsrad 24 dreht, wenn dieses durch den Lebensmittelblock 3 gedreht wird. Bei einer ordnungsgemässen Drehung des Lebensmittelblocks 3 dreht sich auch das Detektionsrad 24 und mit ihm die Halbscheibe mit einer entsprechenden Geschwindigkeit. Die Halbscheibe ist derart gegenüber dem Sensor positioniert, dass dieser in regelmässigen Abständen die Anwesenheit der metallenen Halbseite detektiert. Kein Signal wird detektiert und an die Steuerung 30 weitergeleitet, wenn sich aufgrund der Drehung die Halbscheibe nicht vor dem Sensor befindet. Der induktive Näherungssensor detektiert entsprechend in zeitlich regelmässigen Abständen die Anwesenheit der Halbscheibe und leitet ein entsprechendes Signal an die Steuerung weiter. Solange der zeitliche Abstand zwischen den Signalen unverändert ist oder sich in einem vorgegebenen Rahmen befindet, kann zurückgeschlossen werden, dass auch der Lebensmittelblock 3 ordnungsgemäss dreht. Weicht das detektierte Signal ab, kann dies als Hinweis gelten, dass der Lebensmittelblock 3 nicht ordnungsgemäss dreht, zum Beispiel wie er gebrochen ist oder sich von der Aufnahme 4 gelöst hat. In diesem Fall kann vorgesehen sein, dass mittels der Steuerung zum Beispiel die Drehung der Aufnahme 4 gestoppt wird, um den Lebensmittelblock 3 auszutauschen.

In Fig. 19 ist eine schematische Seitenansicht auf eine Schneide- und Formanlage 1 gemäss Figur 18 zusätzlich mit einem Drehrad für vier Formgreifer 13 gezeigt. Auf der linken Seite dieser Figur ist eine Halteplatte angedeutet, an welcher beispielsweise die Überwachungsvorrichtung sowie das Messer 9 und der Formgreifer 13 inklusive Detektionsrad 34 axial geführt befestigt sein können. Die Befestigungen und Verbindungen sind aus Gründen der besseren Übersichtlichkeit nicht dargestellt.

Die gezeigte Schneide- und Formanlage 1 umfasst in dieser bevorzugten Ausführungsform neben der rotierbaren Aufnahme 4 ein Drehrad, welches für die Befestigung von vier Formgreifern 13 ausgelegt ist. Gezeigt ist hier jedoch lediglich die Position eines Formgreifers 13, wobei auch hier auf die Darstellung der vollständigen Befestigung verzichtet wurde.

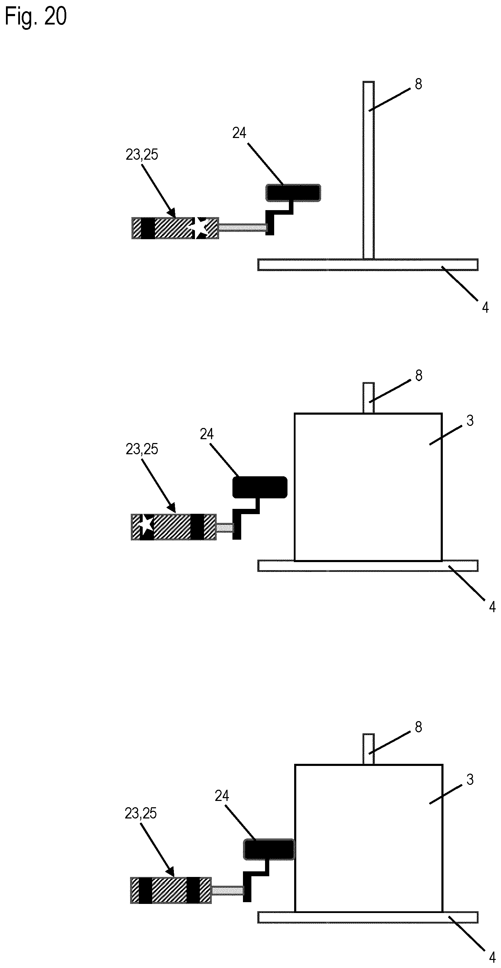

In Fig. 20 ist schematisch die Funktionsweise eines Detektionsrads 34 in einer beispielhaften Ausführungsform gezeigt. Die Überwachungsvorrichtung 23 umfasst hier eine mit dem Detektionsrad 24 gekoppelte, zweiteilige Sensorik 25. Umfasst sind insbesondere zwei hintereinandergeschaltete Reedsensoren, welche mit einem mit dem Detektionsrad 24 gekoppelten Zylinder verbunden sind. Befindet sich kein Lebensmittelblock 3 auf der Aufnahme 4 (sei es absichtlich oder unabsichtlich), ist der Zylinder und damit das Detektionsrad 24 vollständig ausgefahren. Diese Zylinderposition kann von dem ersten, dem Detektionsrad 24 zugewandten Sensor erkannt werden (obere Situation).

In einer Warteposition (Fig. 20 Mitte) ist der Zylinder mit dem Detektionsrad 24 vollständig eingefahren, so dass der zweite, hintere Sensor ein entsprechendes Signal auslöst und an die Steuerung 30 rückmeldet. Ein Signal dieses zweiten Sensors gibt an, dass die Schneide- und Formanlage 1 bereit ist.

In einer Detektionsposition (Fig. 20 unten) ist der Zylinder und das Detektionsrad 24 teilweise ausgefahren. In dieser Position beaufschlägt das Detektionsrad 24 einen vorhandenen und sich drehenden Lebensmittel-Block 3. In dieser Position wird jedoch kein Signal ausgelöst, weder bei dem ersten noch bei dem zweiten Sensor. Dieses nichtvorhandene Signal kann von der Steuerung 30 als ok gewertet werden, dass ein Lebensmittel-Block korrekt aufgesetzt und gedreht wird.

Die Signale der entsprechenden Zylinderpositionen können von der Steuerung 30 (nicht gezeigt) je nach Vorgabe für den weiteren Betrieb der Schneide- und Formanlage 1 verarbeitet werden.

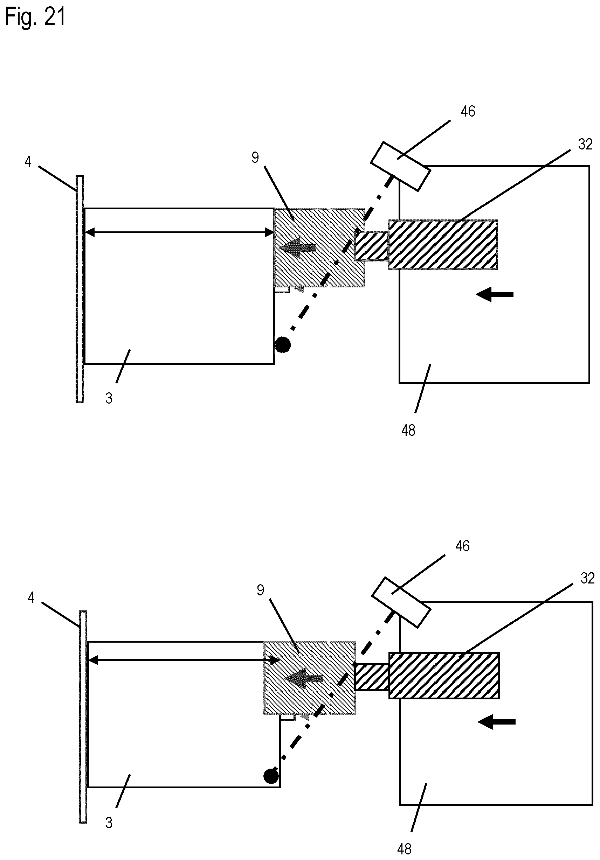

In Fig. 21 ist eine weitere, alternative Überwachungsvorrichtung 23 und ihre Funktionsweise schematisch dargestellt. In dieser Ausführungsform umfasst die Überwachungsvorrichtung 23 einen Laser 46. Dieser ist positionsfest mit dem Messer und/oder dessen Antrieb 32 verbunden. In dieser Figur sind der Laser 46 und der Messerantrieb 32 an einer gemeinsamen Halterung 48 befestigt. Entsprechend wird, wenn das Messer 9 zum Abtrennen von Schnittgut 2 mittels des Messerantriebs 32 in Richtung der Aufnahme 4 bewegt wird, ebenfalls der Laser 46 in Richtung Aufnahme bewegt.

Der Laser 46 ist dabei derart ausgerichtet, dass er auf einen definierten Laserpunkt fokussiert ist. Dieser Laserpunkt liegt im normalen Betrieb kurz oberhalb der Oberfläche des aufgesetzten Lebensmittelblocks 3, also etwas oberhalb der Schneidekante 10 des Messers 9. Wird im normalen Betrieb kontinuierlich Schnittgut 2 von dem Lebensmittelblock 3 abgetrennt, liegt der Laserpunkt dennoch nicht auf dem Lebensmittelblock 3, da sich die Höhe des Lebensmittelblocks 3 (siehe Doppelpfeil) kontinuierlich verringert (obere Ansicht). Erfolgt jedoch keine Abtrennung von Schnittgut 2, wird zwar das Messer 9 zunächst weiterhin in Richtung Aufnahme 4 bewegt, die Höhe des Lebensmittelblocks 3 (siehe Doppelpfeil, untere Ansicht) verändert sich jedoch nicht, so dass der Laserpunkt im Lebensmittelblock 3 liegt. Der Laser sieht somit auf den Lebensmittelblock 3 und das detektierte Signal kann von der Steuerung 30 als Fehler erkannt werden.

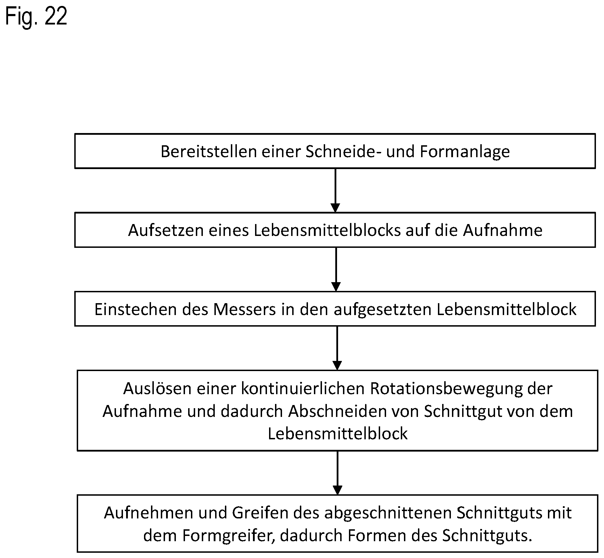

In Fig. 22 ist eine schematische Übersicht möglicher Verfahrensschritte bei der Herstellung von geformten Schnittgut 2 mittels einer Schneide- und Form-Anlage 1 gemäss der vorliegenden Erfindung gezeigt.

In Fig. 23 ist in stark schematisierter Form eine beispielhafte Abfolge von Verfahrensschritten beim Greifen und Formen eines Schnittguts 2 gezeigt. Die jeweiligen Bewegungsrichtungen sind mittels fett gezeigter Pfeile angedeutet. Es ist vorgesehen, dass die gezeigten Bewegungen von einer Steuerung 30 kontrolliert sind:
1. Aufgrund einer Rotationsbewegung des Lebensmittelblocks 3 wird zunächst mittels des aufgesetzten Messers 9 Schnittgut 2 abgeschabt. Der Formgreifer 13 ist in einem geöffneten Zustand der Greiferbacken 14 derart gegenüber der Schneidekante 10 des Messers 9 positioniert, dass das abgetrennte Schnittgut 2 in der Aufnahme 16 zum Liegen kommt. Zum Greifen und Formen wird das Messer 9 entlang der ersten Rotationsachse 12 nach oben bewegt während zudem die Trennvorrichtung 21, hier keilförmig ausgebildet, in Richtung Formgreifer 13 bewegt wird. Durch die Bewegung der keilförmigen Trennvorrichtung 21 wird das Schnittgut 2 vollständig in die Aufnahme 16 des Formgreifers geschoben.
2.Das Schnittgut 2 befindet sich vollständig in dem Formgreifer 13. Die Trennvorrichtung 21 wird wieder in die Passivposition zurückbewegt. Zudem werden die Greiferbacken 14 aufeinander zubewegt und somit in einen geschlossenen Zustand gebracht.
3. Durch das Schliessen der Greiferbacken 14 wird das Schnittgut 2 in die gewünschte Form gebracht. Ausserdem wird so sichergestellt, dass das Schnittgut 2, wenn der Formgreifer 13 von dem Lebensmittelblock 3 wegbewegt wird, nicht während des Transports herausfällt. Wieweit die Greiferbacken 14 geschlossen werden, kann beispielsweise von der gewünschten Form und Konsistenz des Schnittguts 2 abhängen.
4. Der Formgreifer 13 ist mit dem Schnittgut 2 von dem Lebensmittelblock 3 wegbewegt und oberhalb eines Behälters 47 positioniert. Zum Abwerfen des Schnittguts 2 in den Behälter 47 werden die Greiferbacken 14 geöffnet, und der Abwerfer 17 wird aus den Formgreifer 13 bewegt. Das Schnittgut 2 kann so in den Behälter fallen. Währenddessen kann das Messer 9 wieder auf den Lebensmittelblock 3 positioniert und ein neuer, leerer Formgreifer 13 wird gegenüber dem positionierten Messer 9 ausgerichtet.
5. Das Schnittgut 2 fällt in den bereitgestellten Behälter 47. Der Abwerfer 17 kann wieder in den Formgreifer 13 zurückgezogen werden. Zudem sind das Messer 9 und der neue Formgreifer 13 derart positioniert, dass der Lebensmittelblock 3 erneut gedreht und das nächste Schnittgut 2 abgetrennt wird. Es kann insbesondere vorgesehen sein, dass die Anzahl der verwendeten Formgreifer 13 und deren Bewegungen sowie die Bewegung des Messers 9 und der Trennvorrichtung und die Rotation des Lebensmittelblocks 3 derart aufeinander abgestimmt ist, dass ein nahezu kontinuierliches Abtrennen von Schnittgut 2 von dem Lebensmittelblock 3 erfolgen kann.

**LISTE DER BEZUGSZEICHEN**

| | | | |
|---|---|---|---|
| 1 | Schneide- und Formanlage | 25 | Sensorik der Überwachungseinrichtung |
| 2 | Schnittgut | | |
| 3 | Lebensmittel-Block | 30 | Steuerung |
| 4 | Aufnahme | 31 | Aufnahme-Antrieb |
| 5 | Auflagefläche | 31' | Getriebe des Aufnahme-Antriebs |
| 6 | Halteelement | | |
| 7 | erste Ebene | 31" | Motor des Aufnahme-Antriebs |
| 8 | Zentrierdorn | 32 | Messer-Antrieb |
| 9 | Messer | 33 | Formgreifer-Antrieb |
| 10 | Schneidekante | 34 | Drehvorrichtung des Formgreifers |
| 11 | zweite Ebene | | |
| 12 | erste Rotationsachse | 35 | Drehvorrichtungs-Antrieb |
| 13 | Formgreifer | 36 | Trennvorrichtungs-Antrieb |
| 14 | Greiferbacke | 37 | Rotationsachse des Greiferrads |
| 15 | Innenseite der Greiferbacke | 38 | Rotationsache des Detektionsrads |
| 16 | Aufnahme für Hobelgut | | |
| 17 | Abwerfer | 39 | Sensor |
| 18 | Auflagefläche des Abwerfers | 40 | Backenhalter |
| 19 | Greiferhalterung | 41 | Adapterplatte |
| 20 | Begrenzungselement | 42 | Befestigungsplatte |
| 21 | Trennvorrichtung | 43 | distales Ende des Formgreifers |
| 22 | Bewegungsvorrichtung der Trennvorrichtung | 44 | Bewegungseinheit der Greiferbacken |
| 23 | Überwachungsvorrichtung | 45 | Führungsstange |
| 24 | Detektionsrad | | |

## Patentansprüche

1. Schneide- und Form-Anlage (1) zum Herstellen von geformtem Schnittgut (2) von einem Lebensmittel-Block (3), wobei die Schneide- und Form-Anlage (1) umfasst:
- eine Aufnahme (4) mit einer Auflagefläche (5), auf welcher ein Lebensmittel-Block (3) positionierbar ist,
- ein Messer (9) mit einer Schneidekante (10) zum Abschneiden von Schnittgut (2) von einem auf der Auflagefläche (5) der Aufnahme (4) positionierten Lebensmittel-Block (3), wobei das Messer (9) oder die Aufnahme (4) um eine erste Rotationsachse (12) drehbar ausgebildet ist, oder wobei das Messer (9) und die Aufnahme (4) um eine erste Rotationsachse (12) drehbar ausgebildet sind, und
wobei das Messer (9) und die Aufnahme (4) entlang der ersten Rotationsachse (12) zueinander bewegbar ausgebildet sind,
**dadurch gekennzeichnet, dass** die Schneide- und Form-Anlage (1) zudem umfasst:
- einen Formgreifer (13), welcher mit einem distalen Ende auf die Schneidekante (10) des Messers hin ausrichtbar ist und ausgebildet ist, abgeschnittenes Schnittgut (2) automatisiert zu greifen und zu formen, und
- eine Steuerung (30), welche zum Steuern des Formgreifers, des Messers und der Aufnahme sowie zum Steuern der Positionen des Formgreifers, der Aufnahme und des Messers zueinander ausgebildet ist.

2. Schneide- und Form-Anlage (1) gemäss Anspruch 1, **dadurch gekennzeichnet, dass** der Formgreifer (13) zumindest zwei gegeneinander bewegbare Greiferbacken (14) mit jeweils einer Innenseite (15) umfasst, wobei die Greiferbacken (14) mit ihren Innenseiten (15) gemeinsam eine formgebende Aufnahme (16) für von einem Lebensmittel-Block (3) abgeschnittenes Schnittgut (2) bilden, optional eine Tête de Moine Rosetten formende Aufnahme (16) bilden, insbesondere wobei der Formgreifer (13) als ein Winkelgreifer oder als ein Parallelgreifer ausgebildet ist, ferner insbesondere wobei die Greiferbacken (14) so ausgebildet und zueinander angeordnet sind, dass sie an dem distalen Ende des Formgreifers (13) eine kegelförmige Aufnahme (16) bilden.

3. Schneide- und Formanlage (1) gemäss Anspruch 1 oder 2, **dadurch gekennzeichnet, dass** der Formgreifer (13) einen Abwerfer (17) mit einer Auflagefläche (18) für Schnittgut (2) umfasst, wobei der Abwerfer (17) in der Aufnahme (16) und in Richtung des distalen Endes des Formgreifers (13) hin und zurück bewegbar ausgebildet ist, und der Abwerfer optional zudem an dem distalen Ende des Formgreifers aus diesem hinaus bewegbar ausgebildet ist.

4. Schneide- und Form-Anlage (1) gemäss einem der Ansprüche 1 bis 3, **dadurch gekennzeichnet, dass** zumindest eine, bevorzugt beide Greiferbacken (14) am distalen Ende des Formgreifers (13) fingerförmig mit einer Aussparung zwischen jedem Finger ausbildet sind, und wobei der Abwerfer (17) optional fingerförmige Verlängerungen umfasst, welche in die Aussparungen zwischen den Fingern der Greiferbacken (14) eingreifen.

5. Schneide- und Form-Anlage (1) gemäss einem der vorhergehenden Ansprüche, **dadurch gekennzeichnet, dass** die Aufnahme (4) mit einer Rotationsgeschwindigkeit um die erste Rotationsachse (12) drehbar ausgebildet ist, wobei die Schneide- und Form-Anlage (1) zum Drehen der Aufnahme um die erste Rotationsachse (12) einen Aufnahme-Antrieb (31) umfasst, welcher von der Steuerung (30) kontrolliert wird, insbesondere wobei das Messer (9) und der Formgreifer (13) parallel zu der ersten Rotationsachse (12) bewegbar ausgebildet sind, wobei die Steuerung (30) ausgebildet ist, die Bewegung des Messers (9) und des Formgreifers (13) parallel zu der ersten Rotationsachse (12) zu steuern, oder wobei die Schneide- und Formanlage (1) insbesondere einen Messerantrieb (32) umfasst, mit welchem das Messer (9) parallel zu der ersten Rotationsachse (12) bewegt wird, und sie einen Formgreifer-Antrieb (33) umfasst, mit welchem der Formgreifer (13) parallel zu der ersten Rotationsachse (12) bewegt wird.

6. Schneide- und Formanlage (1) gemäss einem der vorhergehenden Ansprüche, **dadurch gekennzeichnet, dass** der Formgreifer (13) an einer Drehvorrichtung (34) befestigt ist, mit welcher der Formgreifer (13) gegenüber der ersten Rotationsachse (12) bewegt werden kann, wobei die Drehvorrichtung (34) mit einem Drehvorrichtungs-Antrieb (35) wirkverbunden ist, insbesondere wobei sich die Schneidekante (10) des Messers (9) senkrecht zu der ersten Rotationsachse (12) erstreckt und neben dieser ersten Rotationsachse (12) angeordnet ist und/oder wobei die Auflagefläche (5) der Aufnahme (4) tellerförmig ist und sich senkrecht zu der ersten Rotationsachse (12) erstreckt und/oder wobei die Aufnahme (4) ein oder mehrere Halteelemente (6) umfasst, welche zumindest auf der Auflagefläche (5) zum Halten eines auf die Aufnahme (4) aufzusetzenden Lebensmittel-Blocks (3) angeordnet sind.

7. Schneide- und Formanlage (1) gemäss einem der vorhergehenden Ansprüche, **dadurch gekennzeichnet, dass** sie eine Trennvorrichtung (21) zum Führen von abgeschnittenem Schnittgut (2) in den Formgreifer umfasst, wobei die Trennvorrichtung (21) gegenüber der ersten Rotationsachse (12) hin- und her-bewegbar ausgebildet ist, wobei die Bewegung der Trennvorrichtung (21) in Abhängigkeit von der Position des Messers (9) von der Steuerung (30) kontrolliert wird, insbesondere wobei die Trennvorrichtung (21) blechförmig oder keilförmig ausgebildet und senkrecht zu der ersten Rotationsachse (12) bewegbar ist, oder die Trennvorrichtung (21) ein Winkelblech ist, welches gegenüber der ersten Rotationsachse (12) kippbar ist, wobei die Schneide- und Formanlage einen Trennvorrichtungsantrieb (36) umfasst, mit welchem die Bewegung der Trennvorrichtung (21) unter Kontrolle der Steuerung (30) durchgeführt wird.

8. Schneide- und Form-Anlage (1) gemäss einem der vorhergehenden Ansprüche, **dadurch gekennzeichnet, dass** die Aufnahme (4) einen Zentrierdorn (8) umfasst, welcher sich im Wesentlichen senkrecht von der Auflagefläche (5) der Aufnahme (4) in Richtung Hobelmesser (9) entlang der ersten Rotationsachse (12) erstreckt.

9. Schneide- und Formanlage (1) gemäss einem der vorhergehenden Ansprüche, **dadurch gekennzeichnet, dass** sie eine Überwachungsvorrichtung (23) umfasst, mit welcher die Anwesenheit eines auf die Aufnahme (4) positionierten Lebensmittel-Blocks (3) detektierbar ist, wobei die Überwachungsvorrichtung (23) mittels der Steuerung kontrolliert wird, insbesondere wobei die Überwachungsvorrichtung (23) ein Detektionsrad (24) umfasst, welches um eine zweite Rotationsachse (25) rotierbar ausgebildet ist, wobei die zweite Rotationsachse (25) parallel zu der ersten Rotationsachse (12) verläuft, und wobei das Detektionsrad mit seiner zweiten Rotationsachse (25) parallel gegenüber und senkrecht zu der ersten Rotationsachse (12) bewegbar ist, ferner insbesondere wobei die Überwachungsvorrichtung (23) eine Sensorik (25) umfasst, mit welcher eine Rotation des Detektionsrads (24) detektierbar ist.

10. Schneide- und Formanlage (1) gemäss einem der vorhergehenden Ansprüche, **dadurch gekennzeichnet, dass** sie ein Halteelement (6) auf der Aufnahme (4) umfasst, welches als eine Vakuum-Vorrichtung zum Ansaugen eines auf die Aufnahme (4) aufgesetzten Lebensmittel-Blocks (3) ausgebildet ist, wobei die Vakuum-Vorrichtung zumindest einen Vakuum-Sensor zum Detektieren eines Vakuums an der Aufnahme (4) umfasst.

11. Schneide- und Formanlage (1) gemäss einem der vorhergehenden Ansprüche, **dadurch gekennzeichnet, dass** sie zum automatisierten Herstellen von geformten Tête de Moine Rosetten ausgebildet ist.

12. Verfahren zum Herstellen von geformten Schnittgut (2) eines Lebensmittelblocks (3), **gekennzeichnet durch** die folgenden Schritte:
- Bereitstellen einer Schneide- und Form-Anlage (1) gemäss einem der vorhergehenden Ansprüche,
- Aufsetzen eines Lebensmittel-Blocks (3) auf die Auflagefläche (5) der Aufnahme (4),
- Bewegen des Messers (9) und/oder Aufnahme (4) unter Kontrolle der Steuerung (30) aufeinander zu, bis das Messer (9) in eine Oberseite des aufgesetzten Lebensmittel-Blocks (3) einsticht,
- Auslösen einer Rotationsbewegung des Messers (9) und/oder der Aufnahme (4) um die erste Rotationsachse (12) und kontinuierliches Bewegen des Messers (9) und/oder der Aufnahme (4) gegeneinander, dabei Abschneiden eines Schnittguts (2) von der Oberseite des aufgesetzten Lebensmittel-Blocks (3),
- Positionieren des Formgreifers (13) gegenüber der Oberfläche des aufgesetzten Lebensmittel-Blocks (3), sowie Aufnehmen und Greifen des Schnittguts (2) in den Formgreifer (13), wodurch das Schnittgut (2) geformt wird.

13. Verfahren zum Herstellen von geformten Schnittgut (2) gemäss Anspruch 12, **dadurch gekennzeichnet, dass** die Aufnahme (4) um die erste Rotationsachse (12) rotiert und zum Einstechen das Messer (9) entlang der ersten Rotationsachse (12) in Richtung Aufnahme (4) bewegt wird, bis die Schneidekante (10) in den Lebensmittelblock (3) einsticht, insbesondere wobei zum Unterbrechen des Abschneidens von Schnittgut (2) das Messer (9) von dem Lebensmittel-Block (3) wegbewegt wird, ferner insbesondere wobei die Schneide- und Form-Anlage (1) eine Überwachungsvorrichtung (23) mit einem Detektionsrad (24) und einer Sensorik (25) umfasst, wobei die Drehung des aufgesetzten Lebensmittel-Blocks (3) überwacht wird, indem das Detektionsrad (24) in Richtung Lebensmittel-Block (3) bewegt wird, bis es den Lebensmittel-Block (3) beaufschlagt, und wobei die resultierende Drehung des Detektionsrads (24) mittels der Sensorik (25) detektiert wird.

14. Verfahren zum Herstellen von geformten Schnittgut (2) gemäss Anspruch 12 oder 13, **dadurch gekennzeichnet, dass** der Formgreifer (13) zwei gegeneinander bewegbare Greiferbacken (14) umfasst, welche gegenüber dem Messer (9) während des Abschneidens von Schnittgut (2) positioniert sind, wobei die Greiferbacken (14) jeweils eine Innenseite (15) umfassen, mit welchen sie gemeinsam eine formgebende Aufnahme (16) für von einem Lebensmittelblock (3) abgeschnittenes Schnittgut (2) bilden, und wobei die Greiferbacken (14) zum Aufnehmen von durch das Messer (9) abgeschnittene Schnittgut (2) voneinander wegbewegt werden und zum Formen des aufgenommenen Schnittguts (2) aufeinander zubewegt werden, insbesondere wobei der Formgreifer (13) einen Abwerfer (17) mit einer Auflagefläche (18) umfasst, wobei in den Formgreifer (13) aufgenommenes Schnittgut (2) auf der Auflagefläche (18) liegt und/oder mittels des Abwerfers (17) aus dem Formgreifer (13) abgegeben wird, ferner insbesondere wobei das aufgenommene und geformte Schnittgut (2) von dem Lebensmittelblock (3) mittels des Formgreifers (13) abtransportiert wird.

15. Verfahren zum Herstellen von geformten Schnittgut (2) gemäss einem der Ansprüche 12 bis 14, **dadurch gekennzeichnet, dass** die Schneide- und Form-Anlage (1) eine Trennvorrichtung (21) zum Führen von abgeschnittenem Schnittgut (2) von dem Messer (9) in den Formgreifer (13) umfasst, wobei zum Aufnehmen des Schnittgut (2) in den Formgreifer das Messer (9) zurückgezogen und gleichzeitig die Trennvorrichtung (21) in Richtung Formgreifer (13) bewegt wird, so dass das von dem Messer (9) abgeschnittene Schnittgut (2) von der Trennvorrichtung (21) beaufschlagt in den Formgreifer (13) hineingeführt wird, insbesondere wobei der Lebensmittel-Block (3) ein Tête de Moine-Käseblock ist und mit der Schneide- und Form-Anlage (1) Tête de Moine Rosetten abgeschabt und geformt werden.

## Claims

1. Cutting and forming plant (1) for producing shaped cut material (2) from a food block (3), wherein the cutting and forming plant (1) comprises:
- a mount (4) with a support surface (5) on which a food block (3) can be positioned,
- a blade (9) with a cutting edge (10) for cutting off cut material (2) from a food block (3) positioned on the support surface (5) of the mount (4),
wherein the blade (9) or the mount (4) is rotatable about a first axis of rotation (12), or wherein the blade (9) and the mount (4) are rotatable about a first axis of rotation (12), and
wherein the blade (9) and the mount (4) are movable relative to one another along the first axis of rotation (12),
**characterized in that** the cutting and forming plant (1) also comprises:
- a forming gripper (13) which can be oriented with a distal end towards the cutting edge (10) of the blade and is configured to automatically grip and shape cut-off cut material (2), and
- a controller (30) which is configured to control the forming gripper, the blade and the mount and to control the positions of the forming gripper, the mount and the blade relative to one another.

2. Cutting and forming plant (1) according to claim 1, **characterized in that** the forming gripper (13) comprises at least two gripper jaws (14) which can be moved relative to one another and each have an inner side (15), wherein the gripper jaws (14) together with their inner sides (15) form a shaping mount (16) for cut material (2) cut off from a food block (3), optionally form a Tête de Moine rossettes shaping mount (16), in particular wherein the forming gripper (13) is designed as an angle gripper or as a parallel gripper, further in particular wherein the gripper jaws (14) are designed and arranged relative to one another such that they form a conical mount (16) at the distal end of the forming gripper (13).

3. Cutting and forming plant (1) according to claim 1 or 2, **characterized in that** the forming gripper (13) comprises an ejector (17) with a support surface (18) for cut material (2), wherein the ejector (17) is movable back and forth in the mount (16) and in the direction of the distal end of the forming gripper (13), and the ejector is also optionally movable out of the forming gripper at the distal end thereof.

4. Cutting and forming plant (1) according to one of claims 1 to 3, **characterized in that** at least one, preferably both, gripper jaws (14) at the distal end of the forming gripper (13) are of finger-shaped design with a cutout between each finger, and wherein the ejector (17) optionally comprises finger-shaped extensions which engage in the cutouts between the fingers of the gripper jaws (14).

5. Cutting and forming plant (1) according to one of the preceding claims, **characterized in that** the mount (4) is rotatable about the first axis of rotation (12) at a rotational speed, wherein the cutting and forming plant (1) for rotating the mount about the first axis of rotation (12) comprises a mount drive (31) which is controlled by the controller (30), in particular wherein the blade (9) and the forming gripper (13) are movable parallel to the first axis of rotation (12), wherein the controller (30) is configured to control the movement of the blade (9) and of the forming gripper (13) parallel to the first axis of rotation (12), or wherein the cutting and forming plant (1) in particular comprises a blade drive (32) with which the blade (9) is moved parallel to the first axis of rotation (12), and it comprises a forming gripper drive (33) with which the forming gripper (13) is moved parallel to the first axis of rotation (12).

6. Cutting and forming plant (1) according to one of the preceding claims, **characterized in that** the forming gripper (13) is fastened to a rotating device (34) with which the forming gripper (13) can be moved relative to the first axis of rotation (12), wherein the rotating device (34) is operatively connected to a rotating device drive (35), in particular wherein the cutting edge (10) of the blade (9) extends perpendicularly to the first axis of rotation (12) and is arranged next to this first axis of rotation (12), and/or wherein the support surface (5) of the mount (4) is plate-shaped and extends perpendicularly to the first axis of rotation (12), and/or wherein the mount (4) comprises one or more holding elements (6) which are arranged at least on the support surface (5) for holding a food block (3) to be placed on the mount (4).

7. Cutting and forming plant (1) according to one of the preceding claims, **characterized in that** it comprises a separating device (21) for guiding cut-off cut material (2) into the forming gripper, wherein the separating device (21) is movable back and forth relative to the first axis of rotation (12), wherein the movement of the separating device (21) is controlled by the controller (30) depending on the position of the blade (9), in particular wherein the separating device (21) is of sheet-metal-shaped or wedge-shaped design and is movable perpendicularly to the first axis of rotation (12), or the separating device (21) is an angle plate which can be tilted relative to the first axis of rotation (12), wherein the cutting and forming plant comprises a separating device drive (36) with which the movement of the separating device (21) is carried out under the control of the controller (30).

8. Cutting and forming plant (1) according to one of the preceding claims, **characterized in that** the mount (4) comprises a centering mandrel (8) which extends substantially perpendicularly from the support surface (5) of the mount (4) in the direction of the plane blade (9) along the first axis of rotation (12).

9. Cutting and forming plant (1) according to one of the preceding claims, **characterized in that** it comprises a monitoring device (23) with which the presence of a food block (3) positioned on the mount (4) can be detected, wherein the monitoring device (23) is controlled by means of the controller, in particular wherein the monitoring device (23) comprises a detection wheel (24) which is rotatable about a second axis of rotation (25), wherein the second axis of rotation (25) runs parallel to the first axis of rotation (12), and wherein the detection wheel is movable with its second axis of rotation (25) parallel relative to and perpendicularly to the first axis of rotation (12), further in particular wherein the monitoring device (23) comprises a sensor system (25) with which a rotation of the detection wheel (24) can be detected.

10. Cutting and forming plant (1) according to one of the preceding claims, **characterized in that** it comprises a holding element (6) on the mount (4) which is designed as a vacuum device for sucking in a food block (3) placed on the mount (4), wherein the vacuum device comprises at least one vacuum sensor for detecting a vacuum at the mount (4).

11. Cutting and forming plant (1) according to one of the preceding claims, **characterized in that** it is configured for automatically producing shaped Tête de Moine rosettes.

12. Method for producing shaped cut material (2) of a food block (3), **characterized by** the following steps:
- providing a cutting and forming plant (1) according to one of the preceding claims,
- placing a food block (3) on the support surface (5) of the mount (4),
- moving the blade (9) and/or mount (4) towards one another under the control of the controller (30) until the blade (9) pierces into an upper side of the placed food block (3),
- triggering a rotational movement of the blade (9) and/or the mount (4) about the first axis of rotation (12) and continuously moving the blade (9) and/or the mount (4) relative to one another, thereby cutting off a cut material (2) from the upper side of the placed food block (3),
- positioning the forming gripper (13) opposite the surface of the placed food block (3), as well as picking up and gripping the cut material (2) in the forming gripper (13), whereby the cut material (2) is shaped.

13. Method for producing shaped cut material (2) according to claim 12, **characterized in that** the mount (4) rotates about the first axis of rotation (12) and for piercing the blade (9) is moved along the first axis of rotation (12) in the direction of the mount (4) until the cutting edge (10) pierces into the food block (3), in particular wherein for interrupting the cutting off of cut material (2) the blade (9) is moved away from the food block (3), further in particular wherein the cutting and forming plant (1) comprises a monitoring device (23) with a detection wheel (24) and a sensor system (25), wherein the rotation of the placed food block (3) is monitored by moving the detection wheel (24) in the direction of the food block (3) until it acts on the food block (3), and wherein the resulting rotation of the detection wheel (24) is detected by means of the sensor system (25).

14. Method for producing shaped cut material (2) according to claim 12 or 13, **characterized in that** the forming gripper (13) comprises two gripper jaws (14) which can be moved relative to one another, which are positioned opposite the blade (9) during the cutting off of cut material (2), wherein the gripper jaws (14) each comprise an inner side (15) with which they together form a shaping mount (16) for cut material (2) cut off from a food block (3), and wherein the gripper jaws (14) for picking up cut material (2) cut off by the blade (9) are moved away from one another and for shaping the picked-up cut material (2) are moved towards one another, in particular wherein the forming gripper (13) comprises an ejector (17) with a support surface (18), wherein cut material (2) picked up in the forming gripper (13) lies on the support surface (18) and/or is discharged from the forming gripper (13) by means of the ejector (17), further in particular wherein the picked-up and shaped cut material (2) is transported away from the food block (3) by means of the forming gripper (13).

15. Method for producing shaped cut material (2) according to one of claims 12 to 14, **characterized in that** the cutting and forming plant (1) comprises a separating device (21) for guiding cut-off cut material (2) from the blade (9) into the forming gripper (13), wherein for picking up the cut material (2) in the forming gripper the blade (9) is retracted and at the same time the separating device (21) is moved in the direction of the forming gripper (13) so that the cut material (2) cut off by the blade (9) is introduced into the forming gripper (13) acted on by the separating device (21), in particular wherein the food block (3) is a Tête de Moine cheese block and Tête de Moine rosettes are scraped off and shaped with the cutting and forming plant (1).

## Revendications

1. Installation de découpe et de façonnage (1) permettant de fabriquer un produit coupé et façonné (2) à partir d'un bloc d'aliment (3), dans laquelle l'installation de découpe et de façonnage (1), comprend :
- un dispositif de réception (4) présentant une surface d'appui (5) sur laquelle un bloc d'aliment (3) peut être positionné,
- une lame (9) qui comprend un tranchant (10) destiné à découper le produit coupé (2) à partir d'un bloc d'aliment (3) positionné sur la surface d'appui (5) du dispositif de réception (4), la lame (9) ou le dispositif de réception (4) étant conçu(e) pour pouvoir tourner autour d'un premier axe de rotation (12), ou la lame (9) et le dispositif de réception (4) étant conçus pour pouvoir tourner autour d'un premier axe de rotation (12), et
le lame (9) et le dispositif de réception (4) étant conçus de façon à pouvoir se déplacer l'un par rapport à l'autre le long du premier axe de rotation (12),
**caractérisé en ce que l'installation** de découpe et de façonnage (1) comprend en outre :
- une pince de façonnage (13) qui peut être alignée, par son l'extrémité distale, sur le tranchant (10) de la lame et qui est conçue pour saisir et façonner de façon automatisée le produit coupé découpé (2), et
- un dispositif de commande (30) conçu pour commander la pince de façonnage, la lame et le dispositif de réception, ainsi que pour commander les positions de la pince de façonnage, du dispositif de réception et de la lame les uns par rapport aux autres.

2. Installation de découpe et de façonnage (1) selon la revendication 1, **caractérisée en ce que** la pince de façonnage (13) comprend au moins deux mâchoires de pince (14) mobiles l'une par rapport à l'autre et présentant chacune une face intérieure (15), les mâchoires de pince (14) formant ensemble, avec leurs faces intérieures (15), un logement de façonnage (16) du produit coupé (2) découpé à partir d'un bloc d'aliment (3), formant en option un logement (16) façonnant des rosettes de Tête de moine, en particulier dans laquelle la pince de façonnage (13) est conçue comme une pince angulaire ou comme une pince parallèle, et en particulier en outre dans laquelle les mâchoires de pince (14) sont conçues et disposées les unes par rapport aux autres de façon à former un logement conique (16) au niveau de l'extrémité distale de la pince de façonnage (13).

3. Installation de découpe et de façonnage (1) selon la revendication 1 ou 2, **caractérisée en ce que** la pince de façonnage (13) comprend un éjecteur (17) qui comprend une surface d'appui (18) pour le produit coupé (2), l'éjecteur (17) étant conçu de façon à pouvoir se déplacer dans le logement (16) et dans la direction de l'extrémité distale de la pince de façonnage (13) et inversement, et l' éjecteur étant en outre conçu, en option, de façon à pouvoir être déplacé hors de l'extrémité distale de la pince de façonnage.

4. Installation de découpe et de façonnage (1) selon l'une des revendications 1 à 3, **caractérisée en ce qu'**au moins une, de préférence les deux, mâchoires de pince (14), sont conçues, au niveau de l'extrémité distale de la pince de façonnage (13), en forme de doigts présentant un évidement entre chaque doigt, et dans laquelle l'éjecteur (17) comprend en option des prolongements en forme de doigts qui s'engrènent dans les évidements entre les doigts des mâchoires de pince (14).

5. Installation de découpe et de façonnage (1) selon l'une des revendications précédentes, **caractérisée en ce que** le dispositif de réception (4) est conçu pour pouvoir tourner autour du premier axe de rotation (12) à une certaine vitesse de rotation, dans laquelle l'installation de découpe et de façonnage (1), pour faire tourner le dispositif de réception autour du premier axe de rotation (12), comprend un entraînement de logement de réception (31) qui est contrôlé par la commande (30), en particulier dans laquelle la lame (9) et la pince de façonnage (13) sont conçues pour pouvoir être déplacées parallèlement au premier axe de rotation (12), dans laquelle la commande (30) est conçue pour commander le mouvement de la lame (9) et de la pince de façonnage (13) parallèlement au premier axe de rotation (12), ou dans laquelle l'installation de découpe et de façonnage (1) comprend en particulier un entraînement de lame (32) grâce auquel la lame (9) est déplacée parallèlement au premier axe de rotation (12), et comprend un entraînement de pince de façonnage (33) grâce auquel la pince de façonnage (13) est déplacée parallèlement au premier axe de rotation (12).

6. Installation de découpe et de façonnage (1) selon l'une des revendications précédentes, **caractérisée en ce que** la pince de façonnage (13) est fixée à un dispositif de rotation (34) avec lequel la pince de façonnage (13) peut être déplacée par rapport au premier axe de rotation (12), le dispositif de rotation (34) étant relié par action à un entraînement de dispositif de rotation (35), le tranchant (10) de la lame (9) s'étendant en particulier perpendiculairement au premier axe de rotation (12) et étant disposée à côté de ce premier axe de rotation (12) et/ou la surface d'appui (5) du dispositif de réception (4) étant en forme d'assiette et s'étendant perpendiculairement au premier axe de rotation (12) et/ou le dispositif de réception (4) comprenant un ou plusieurs éléments de maintien (6) qui sont disposés au moins sur la surface d'appui (5) pour maintenir un bloc d'aliment (3) à placer sur le dispositif de réception (4).

7. Installation de découpe et de façonnage (1) selon l'une des revendications précédentes, **caractérisée en ce qu'**elle comprend un dispositif de séparation (21) permettant de guider le produit coupé découpé (2) dans la pince de façonnage, le dispositif de séparation (21) étant conçu de façon à pouvoir être déplacé en va et vient par rapport au premier axe de rotation (12), le déplacement du dispositif de séparation (21) étant contrôlé par la commande (30) en fonction de la position de la lame (9), le dispositif de séparation (21) étant en particulier exécuté en forme de tôle ou de coin et pouvant être déplacé perpendiculairement au premier axe de rotation (12), ou le dispositif de séparation (21) étant une plaque angulaire qui peut basculer par rapport au premier axe de rotation (12), l'installation de découpe et de façonnage comprenant un entraînement de dispositif de séparation (36) grâce auquel le déplacement du dispositif de séparation (21) est effectué sous le contrôle de la commande (30).

8. Installation de découpe et de façonnage (1) selon l'une des revendications précédentes, **caractérisée en ce que** le dispositif de réception (4) comprend un mandrin de serrage (8) qui s'étend essentiellement perpendiculairement à la surface d'appui (5) du dispositif de réception (4) en direction de la lame de rabot (9) le long du premier axe de rotation (12).

9. Installation de découpe et de façonnage (1) selon l'une des revendications précédentes, **caractérisée en ce qu'**elle comprend un dispositif de surveillance (23) permettant de détecter la présence d'un bloc d'aliment (3) positionné sur le dispositif de réception (4), le dispositif de surveillance (23) étant commandé par la commande, le dispositif de surveillance (23) comprenant en particulier une roue de détection (24) qui est conçue pour tourner autour d'un deuxième axe de rotation (25), le deuxième axe de rotation (25) s'étendant parallèlement au premier axe de rotation (12), et la roue de détection pouvant se déplacer, par son deuxième axe de rotation (25) parallèlement et perpendiculairement au premier axe de rotation (12), le dispositif de surveillance (23) comprenant en outre en particulier un système d'analyse sensorielle (25) permettant de détecter une rotation de la roue de détection (24).

10. Installation de découpe et de façonnage (1) selon l'une des revendications précédentes, **caractérisée en ce qu'**elle comprend sur le dispositif de réception (4) un élément de maintien (6) qui est conçu comme un dispositif à vide pour aspirer un bloc d'aliment (3) placé sur le dispositif de réception (4), le dispositif à vide comprenant au moins un capteur de vide pour détecter un vide au niveau du dispositif de réception (4).

11. Installation de découpe et de façonnage (1) selon l'une des revendications précédentes, **caractérisée en ce qu'**elle est conçue pour fabriquer de façon automatisée des rosettes façonnées de Tête de Moine.

12. Procédé de fabrication d'un produit coupé façonné (2) à partir d'un bloc d'aliment (3), **caractérisé par** les étapes suivantes:
- mettre à disposition une installation de découpe et de façonnage (1) selon l'une des revendications précédentes,
- placer un bloc d'aliment (3) sur la surface d'appui (5) du dispositif de réception (4),
- déplacer la lame (9) et/ou le dispositif de réception (4) sous le contrôle de la commande (30) l'un vers l'autre, jusqu'à ce que la lame (9) pénètre dans une face supérieure du bloc d'aliment (3) posé,
- initier un déplacement en rotation de la lame (9) et/ou du dispositif de réception (4) autour du premier axe de rotation (12) et un déplacement continu de la lame (9) et/ou du dispositif de réception (4) l'un par rapport à l'autre, découpant ainsi un produit coupé (2) à partir de la face supérieure du bloc d'aliment (3) posé,
- positionner la pince de façonnage (13) par rapport à la surface du bloc d'aliment (3) posé, puis placer et saisir le produit coupé (2) dans la pince de façonnage (13), ce qui permet de façonner le produit coupé (2).

13. Procédé de fabrication d'un produit coupé façonné (2) selon la revendication 12, **caractérisé en ce que** le dispositif de réception (4) tourne autour du premier axe de rotation (12) et, pour s'introduire, la lame (9) est déplacée le long du premier axe de rotation (12) en direction du dispositif de réception (4) jusqu'à ce que le tranchant (10) pénètre dans le bloc d'aliment (3), où en particulier, pour interrompre la découpe du produit coupé (2), la lame (9) est éloignée du bloc d'aliment (3), et l'installation de découpe et de façonnage (1) comprenant en outre en particulier un dispositif de surveillance (23) comportant une roue de détection (24) et un système d'analyse sensorielle (25), la rotation du bloc d'aliment (3) posé étant surveillée en déplaçant la roue de détection (24) dans la direction du bloc d'aliment (3) jusqu'à ce qu'elle touche le bloc d'aliment (3), et la rotation de la roue de détection (24) qui en résulte étant détectée au moyen du système d'analyse sensorielle (25).

14. Procédé de fabrication d'un produit coupé façonné (2) selon la revendication 12 ou 13, **caractérisé en ce que** la pince de façonnage (13) comprend deux mâchoires de pince (14) mobiles l'une par rapport à l'autre, qui sont positionnées en face de la lame (9) pendant la découpe du produit coupé (2), les mâchoires de pince (14) comprenant chacune une face intérieure (15) avec laquelle elles forment ensemble un logement de façonnage (16) d'un produit coupé (2) découpé à partir d'un bloc d'aliment (3), et les mâchoires de pince (14) étant écartées l'une de l'autre pour recevoir le produit coupé (2) découpé par la lame (9) et rapprochées l'une de l'autre pour façonner le produit coupé (2) reçu, la pince de façonnage (13) comprenant en particulier un éjecteur (17) qui présente une surface d'appui (18), le produit coupé (2) reçu dans la pince de façonnage (13) reposant sur la surface d'appui (18) et/ou étant évacué de la pince de façonnage (13) au moyen de l'éjecteur (17), où en particulier, le produit coupé (2) reçu et façonné étant évacué hors du bloc d'aliment (3) au moyen de la pince de façonnage (13).

15. Procédé de fabrication d'un produit coupé façonné (2) selon l'une des revendications 12 à 14, **caractérisé en ce que** l'installation de découpe et de façonnage (1) comprend un dispositif de séparation (21) permettant de guider le produit coupé (2) découpé par la lame (9) dans la pince de façonnage (13), la lame (9), pour réceptionner le produit coupé (2) dans la pince de façonnage, étant rétractée et le dispositif de séparation (21) étant simultanément déplacé dans la direction de la pince de façonnage (13), de sorte que le produit coupé (2) découpé par la lame (9) est introduit dans la pince de façonnage (13) sous l'action du dispositif de séparation (21), où en particulier le bloc d'aliment (3) est un bloc de fromage Tête de Moine, et l'installation de découpe et de façonnage (1) permet de découper et de façonner des rosettes de Tête de moine .
